# EUROPEAN PATENT APPLICATION

(11) **EP 2 939 808 A1**
(43) Date of publication of application: **04.11.2015**
(21) Application number: 13867823.0
(22) Date of filing: 18.12.2013
(51) Int. Cl.: B28B 11/10

(54) **METHOD FOR MANUFACTURING HONEYCOMB STRUCTURE**

(30) Priority: 27.12.2012 JP 2012285679; 28.06.2013 JP 2013136539
(71) Applicant: Sumitomo Chemical Company Limited, Tokyo 104-8260 (JP)
(72) Inventor: INOUE Masashi, Niihama-shi Ehime 792-8521 (JP); NAITO Tatsuya, Niihama-shi Ehime 792-8521 (JP); IKAWA Hiroyuki, Tsukuba-shi Ibaraki 300-2655 (JP); KOMORI Teruo, Niihama-shi Ehime 792-0804 (JP)
(74) Representative: Vossius & Partner Patentanwälte Rechtsanwälte mbB
(86) International application number: PCT/JP2013/083922
(87) International publication number: WO 2014/103839

(57) **Abstract**

A method for manufacturing a honeycomb structure in which some of a plurality of through-holes that are opened at the end face of the cylinder, and mutually divided by partitions, have been closed, wherein a closing jig is inserted into some of the plurality of hexagonal cells of a green honeycomb molded body which has a plurality of hexagonal cells mutually divided by partitions and is open at the end face of the cylinder, thereby contact bonding together the partitions to close the hexagonal cells. Thus, it is possible to close hexagonal cells in a very simple manner during manufacture of the honeycomb molded body.

## Description

### Technical Field

An embodiment of the invention relates to a closing jig for a green honeycomb molded body and to a method for manufacturing a honeycomb structure, and relates to a closing jig for a green honeycomb molded body that is to become a honeycomb structure by firing, and to a method for manufacturing a honeycomb structure.

### Background Art

Ceramic honeycomb structures having a plurality of through-holes with polygonal cross-sections, for example, are known in the prior art. Such honeycomb structures are used in diesel particulate filters and the like. A honeycomb structure is manufactured by molding a ceramic raw powder by an extrusion method or the like to manufacture a green honeycomb molded body, cutting the green honeycomb molded body to a prescribed length and closing and calsining it. PTL 1 discloses a method of manufacturing such a honeycomb filter. In PTL 1, a closing material is pressed with a piston against one end of a honeycomb structure situated in a cylinder, thereby supplying the closing material to the ends of the through-holes of the honeycomb structure, and closing the through-holes.

### Citation List

### Patent Literature

[PTL 1] Japanese Examined Patent Application Publication SHO No. 63-24731

### Summary of Invention

### Technical Problem

However, in the method of PTL 1 it is necessary to use a mask for selection of the sites of closing material injection and closing, and to provide a step of precise cutting after the drying step.

One aspect of the invention has been accomplished in light of this issue, and its object is to provide a method for manufacturing a honeycomb structure that can reduce the number of steps employed.

### Solution to Problem

One aspect of the invention is a method for manufacturing a honeycomb structure having a plurality of through-holes opening at end faces of a cylinder and mutually divided by partitions, some of the through-holes being closed, comprising a closing step of bonding together the partitions to close the through-holes by inserting a closing jig into some of the through-holes of a green honeycomb molded body having a plurality of hexagonal through-holes mutually divided by partitions and opening at end faces of the cylinder.

According to this construction it is possible to close through-holes in a very simple manner during manufacture of the honeycomb molded body. In addition, when the honeycomb structure that is manufactured is applied in a diesel particulate filter, it is possible to reduce pressure loss since the gas flow passage inlet can be widened compared to conventional closing methods. The closing step may be provided immediately after extrusion molding from the raw material into the green honeycomb molded body that is to be calcined into the honeycomb structure, and cutting to the prescribed length. Also, the through-holes of the green honeycomb molded body immediately after extrusion molding from the raw material and cutting to the prescribed length are hexagonal. When used as a diesel particulate filter, therefore, numerous holes are opened in the gas flow passage, that have shorter wall lengths than quadrilateral-shaped holes, and therefore the properties are more excellent as a diesel particulate filter.

According to another aspect of the invention, the green honeycomb molded body has one first through-hole and six second through-holes around the first through-hole, the second through-holes being adjacent to the first through-hole by the partitions being interposed therebetween and having smaller open areas than the first through-hole, and in the closing step, the partitions of the first through-hole are bonded together to close the first through-hole by inserting closing protrusions of the closing jig having a plurality of closing protrusions including square pyramidal shapes and/or truncated square pyramidal shapes with rhomboid bottom faces into the second through-holes with long sides of the closing protrusions contacting the partitions of the first through-hole.

According to this construction, the green honeycomb molded body has a first through-hole, and six second through-holes surrounding the first through-hole and adjacent to it across partitions, with smaller open areas than the first through-hole. Thus, when the honeycomb structure is implemented in a diesel particulate filter, for example, at the inlet side of the diesel particulate filter, the first through-hole which has a large open area is closed and the second through-holes with small open areas are opened, while at the outlet side, the second through-holes with small open areas are closed and the first through-hole with large open area is opened, such that the filtration area can be increased beyond one in which through-holes with equal open areas are adjacent to each other. When implemented in a diesel particulate filter, therefore, it is possible to achieve lower pressure loss with smoke accumulation and higher smoke capture efficiency. Furthermore, in the closing step, the closing protrusions of the closing jig, which has a plurality of closing protrusions that include square pyramidal shapes and/or truncated square pyramidal shapes with rhomboid bottom faces, are inserted in the second through-holes with their long sides contacting the partitions of the first through-hole, thereby causing contact bonding between the partitions and allowing closing of the first through-hole. This will allow easy closing of the first through-hole that is surrounded by the second through-holes. Thus, when it used as a diesel particulate filter it is possible to obtain more excellent properties when it is implemented on the inlet side.

According to yet another aspect of the invention, in the closing step, the partitions of the through-holes are bonded together to close the through-hole by inserting closing protrusions of the closing jig having a plurality of closing protrusions including triangular pyramidal shapes and/or truncated triangular pyramidal shapes into each of the six through-holes adjacent around one of the through-holes.

According to this construction, in the closing step, the closing protrusions of the closing jig, which has a plurality of closing protrusions that include triangular pyramidal shapes and/or truncated triangular pyramidal shapes, are inserted into each of the six adjacent through-holes surrounding the single through-hole, thereby causing contact bonding between the partitions and closing the through-holes. Consequently, if the closing protrusions are inserted into the through-holes so that, for example, each of the sides of the plurality of triangular pyramidal closing protrusions contact with the partitions of the hexagonal through-hole, it is possible to easily close the one center through-hole of the seven mutually adjacent through-holes. It is therefore possible to efficiently accomplish closing of the close on the side that is to be the inlet side when used as a diesel particulate filter.

According to yet another aspect of the invention, in the closing step, the partitions of the through-holes are bonded together to close the through-holes by inserting closing protrusions of the closing jig having a plurality of closing protrusions including conical and/or truncated conical shapes into each one of the through-holes surrounded by the six through-holes.

According to this construction, in the closing step, the closing protrusions of the closing jig, which has a plurality of closing protrusions that include conical shapes and/or truncated conical shapes, are inserted into each single through-hole surrounded by six through-holes, thereby causing contact bonding between the partitions and closing the through-holes. Consequently, if the closing protrusions are inserted into the through-holes so that, for example, the sides of the plurality of conical closing protrusions contact with the partitions of the hexagonal single through-hole, it is possible to easily close the six surrounding through-holes of the seven mutually adjacent through-holes. It is therefore possible to efficiently accomplish closing of the close on the side that is to be the outlet side when used as a diesel particulate filter.

According to yet another aspect of the invention, in the closing step, the partitions of the through-holes are bonded together to close the through-holes by inserting closing protrusions of the closing jig having a plurality of closing protrusions including hexagonal pyramidal and/or truncated hexagonal pyramidal shapes into each one of the through-holes surrounded by the six through-holes.

According to this construction, in the closing step, the closing protrusions of the closing jig, which has a plurality of closing protrusions that include hexagonal pyramidal shapes and/or truncated hexagonal pyramidal shapes, are inserted into each through-hole surrounded by six through-holes, thereby causing contact bonding between the partitions and closing the through-holes. Consequently, if the plurality of hexagonal pyramidal closing protrusions are inserted into the same hexagonal through-hole, it is possible to easily accomplish smoother closing of the six surrounding through-holes of the seven mutually adjacent through-holes. It is therefore possible to efficiently accomplish closing of the close on the side that is to be the outlet side when used as a diesel particulate filter.

In this case, in the closing step, the through-holes are closed by the closing jig having the closing protrusions each being closest to the hexagonal pyramidal and/or truncated hexagonal pyramidal side sections.

According to this construction, in the closing step, the through-holes are closeed with a closing jig having closing protrusions wherein each of the closing protrusions are closest at the hexagonal pyramidal and/or truncated hexagonal pyramidal side sections. Consequently, each of the closing protrusions is situated across a relative distance, thus facilitating manufacture of the closing jig. Furthermore, the hexagonal holes that are open on the end face of the honeycomb structure after closing are also mutually situated at relative distances at the side sections, while the closed sections are thickened so that the strength can be increased.

According to yet another aspect of the invention, in the closing step, the through-holes are closed by a closing jig having the closing protrusions each adapting the hexagonal pyramidal and/or truncated hexagonal pyramidal base sections to face each other and be in close contact.

According to this construction, the through-holes are closed with a closing jig having closing protrusions wherein each of the closing protrusions have the base sections of the hexagonal pyramidal shapes and/or truncated hexagonal pyramidal shapes facing each other while being in close contact with each other. Consequently, the hexagonal holes that are opened at the end face of the honeycomb structure after closing are situated in relatively close contact with each other, allowing the area at the closed sections to be narrowed and thus further reducing pressure loss.

Also, according to yet another aspect of the invention, in the closing step, the through-holes are closed by the closing jig having grooves in a valley between each of the closing protrusions thereof, such that the bonded partitions become mutually parallel across a prescribed length from the end face.

According to this construction, in the closing step, the through-holes are closed with a closing jig comprising grooves between each of the closing protrusions of the closing jig with a plurality of closing protrusions, thereby closing the through-holes in such a manner that the contact bonded partitions are mutually parallel across a prescribed length from the end face. Consequently, since the contact bonded lengths with the partitions parallel to each other after closing are the prescribed lengths, the contact bonding strength is further increased. Furthermore, when used as a diesel particulate filter, the air resistance is reduced at the contact bonded sections between partitions, allowing the pressure loss to be reduced.

Also, according to yet another aspect of the invention, in the closing step, the through-holes are closed by the closing jig round-chamfered at a valley between each of the closing protrusions, such that the bonded partitions become rounded at the end face.

According to this construction, in the closing step, the through-holes are closed with a closing jig that has been round chamfered between each of the closing protrusions of the closing jig with a plurality of closing protrusions, thereby closing the through-holes in such a manner that the contact bonded partitions envelop the rounded sections at the end face. Consequently, when used as a diesel particulate filter, the air resistance is reduced at the joining sections between partitions, allowing the pressure loss to be reduced. This can also result in resistance to chipping and the like at the bonded edges.

According to yet another aspect of the invention, in the closing step, the through-holes at both end faces of the green honeycomb molded body are closed simultaneously, immediately after the green honeycomb molded body has been extrusion-molded from a raw material and cut to a prescribed length, and the through-holes on at least one end face of the green honeycomb molded body are closed by inserting the closing jig into some of the through-holes.

According to this construction, in the closing step, immediately after the green honeycomb molded body has been extrusion molded from a raw material and cut to the prescribed length, the through-holes at both end faces of the green honeycomb molded body are simultaneously closed, the through-holes on at least one end face of the green honeycomb molded body being closed by inserting a closing jig into some of the plurality of through-holes. Consequently, it is possible to accomplish closing of the through-holes more efficiently than by a method of closing the through-holes on each end face.

Furthermore, according to yet another aspect of the invention, further comprising a supporting step of supporting with the closing jig the lower end face of the green honeycomb molded body immediately after it being extrusion-molded in a vertical downward direction from the raw material, wherein in the closing step, the partitions are bonded together to close the through-holes by respectively inserting a plurality of closing protrusions of the closing jig into some of the through-holes on the lower end face of the green honeycomb molded body after being supported in the supporting step.

When the diameter of a green honeycomb molded body is increased, there is increased bending due to gravity when the green honeycomb molded body is extrusion molded from the raw material in the horizontal direction, and it can be difficult to support the green honeycomb molded body at the sides. With this construction, however, in the supporting step, the lower end face of the green honeycomb molded body is supported with a closing jig immediately after having been extrusion molded from the raw material in the vertical downward direction. Even with large-diameter green honeycomb molded bodies, therefore, it is possible to support the green honeycomb molded body without causing bending or distortion of the through-holes. Furthermore, in the subsequent closing step, a plurality of closing protrusions of the closing jig are inserted into each of some of the through-holes on the lower end face of the green honeycomb molded body that has been supported in the supporting step, contact bonding together the partitions to close the through-holes. This allows the supporting step and closing step to be conducted in a continuous and efficient manner.

Furthermore, according to yet another aspect of the invention, the closing jig is selectively modifiable to being in a state such that the closing protrusions are housed on an inner side of a support surface and a state such that the closing protrusions project to an outer side of the support surface, in the supporting step, the lower end face of the green honeycomb molded body immediately after being extrusion-molded from the raw material in the vertical downward direction is supported by the support surface of the closing jig having closing protrusions in the state of being housed state on the inner side of the support surface, and in the closing step, the partitions are bonded together to close the through-holes by respectively inserting the closing protrusions of the closing jig having closing protrusions in the state of projecting to the outer side of the support surface into some of the through-holes on the lower end face of the green honeycomb molded body.

According to this construction, the closing jig is selectively modifiable in regard to the state in which the closing protrusions are retracted on the inner side of the support surface and the state in which the closing protrusions project to the outer side of the support surface, and in the supporting step, the lower end face of the green honeycomb molded body is supported immediately after being extrusion molded from the raw material in the vertical downward direction, by the support surface of the closing jig having closing protrusions in the retracted state on the inner side of the support surface. Even with a large-diameter green honeycomb molded body, therefore, it is possible to more stably support the green honeycomb molded body without causing bending or distortion of the through-holes. Furthermore, in the closing step, the closing protrusions of the closing jig, which has the closing protrusions projecting to the outer side of the support surface, are inserted into each of some of the through-holes on the lower end face of the green honeycomb molded body to contact bond together the partitions for closing of the through-holes. Thus, it is possible to contact bond together the partitions and close the through-holes while supporting the green honeycomb molded body.

### Advantageous Effects of Invention

By the method for manufacturing a honeycomb structure according to one aspect of the invention, it is possible to reduce the number of steps employed.

### Brief Description of Drawings

Fig. 1(a) is a perspective view of a green honeycomb molded body having hexagonal cells, before closing, and (b) is a partial magnified view of (a).
Fig. 2 is a partial cross-sectional view of a closing jig for the inlet side of a green honeycomb molded body having hexagonal cells according to a first embodiment.
Fig. 3 is a magnified perspective view of section A of Fig. 2.
Fig. 4 is a magnified plan view of section A of Fig. 2.
Fig. 5 is a magnified cross-sectional view of section A of Fig. 2.
Fig. 6 is a magnified plan view of a region corresponding to section A of

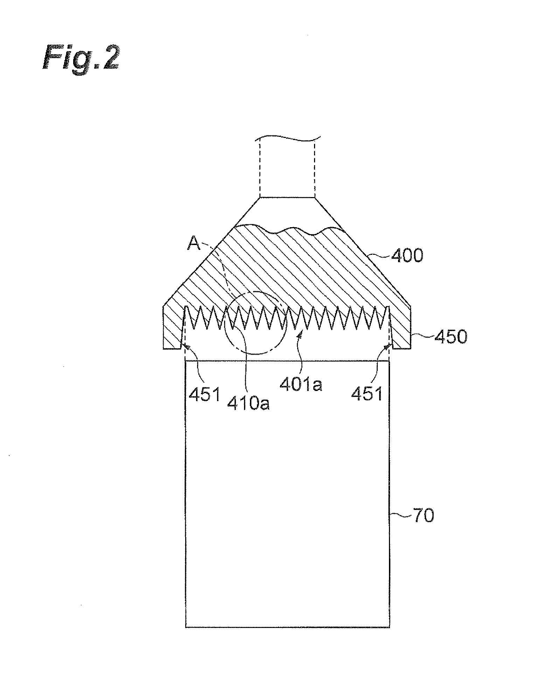

Fig. 2, in a closing jig for the outlet side of a green honeycomb molded body having hexagonal cells according to a first embodiment.

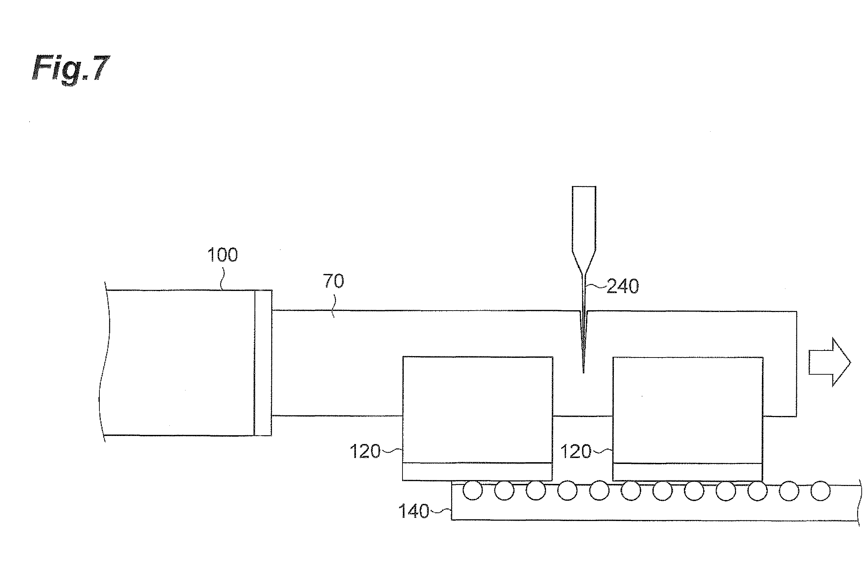

Fig. 7 is a side view showing the cutting step for a green honeycomb molded body according to the first embodiment.

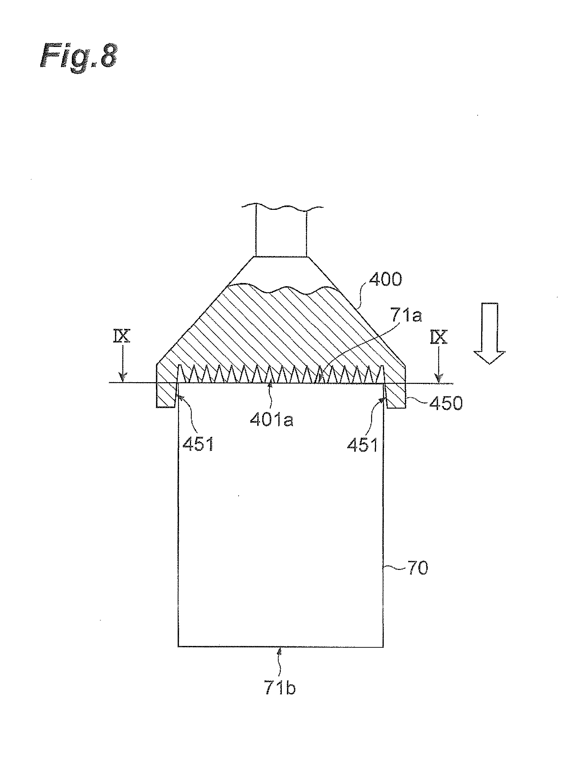

Fig. 8 is a partial cross-sectional view showing the initial state during the closing step on the inlet side of a green honeycomb molded body having hexagonal cells according to the first embodiment.

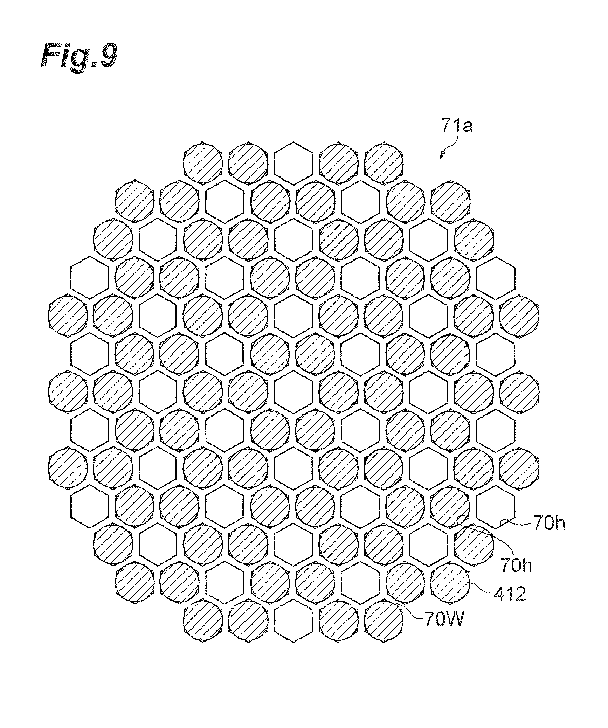

Fig. 9 is a cross-sectional view of Fig. 8 along line IX-IX.

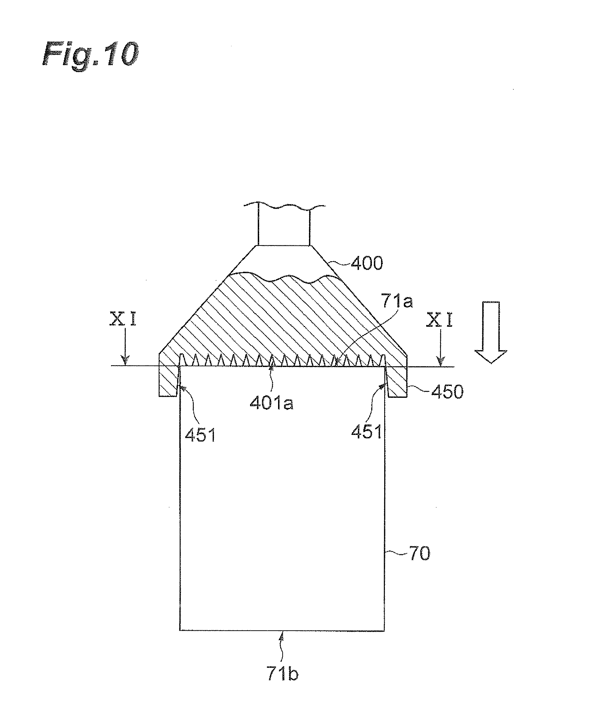

Fig. 10 is a partial cross-sectional view showing the interim state during the closing step of Fig. 9.

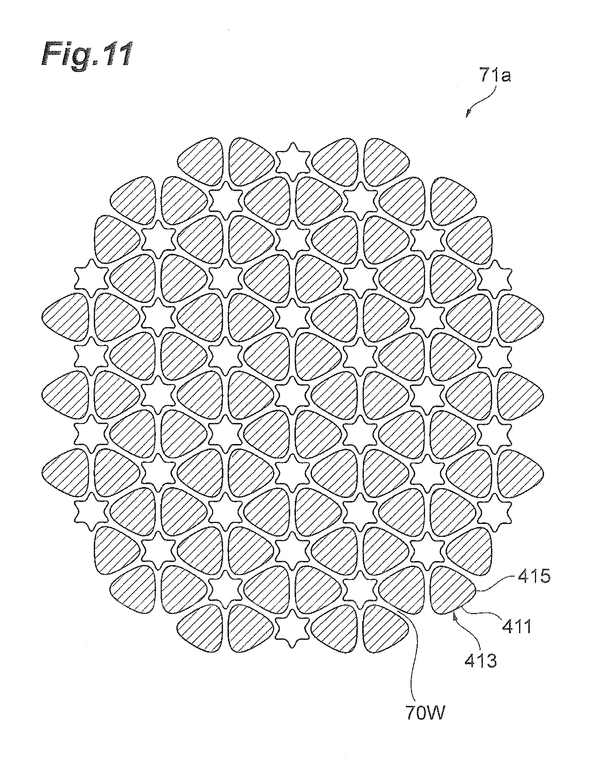

Fig. 11 is a cross-sectional view of Fig. 10 along line XI-XI.

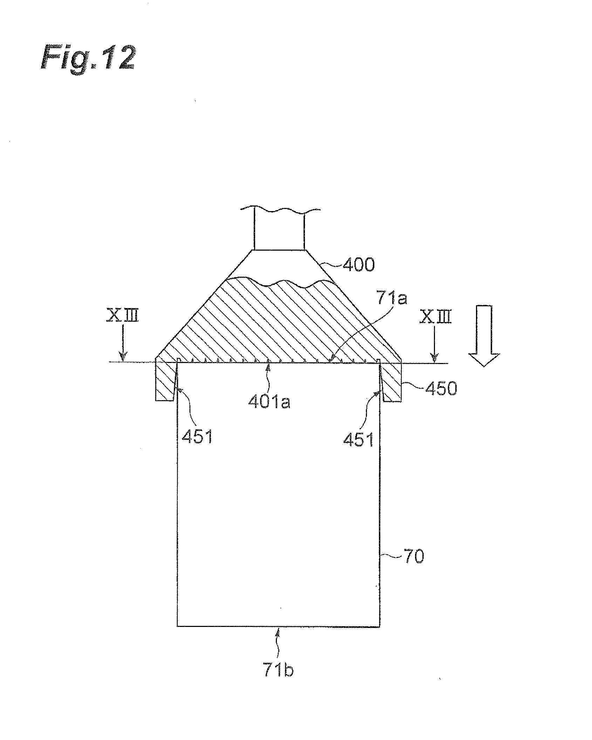

Fig. 12 is a partial cross-sectional view showing the final state during the closing step of Fig. 9.

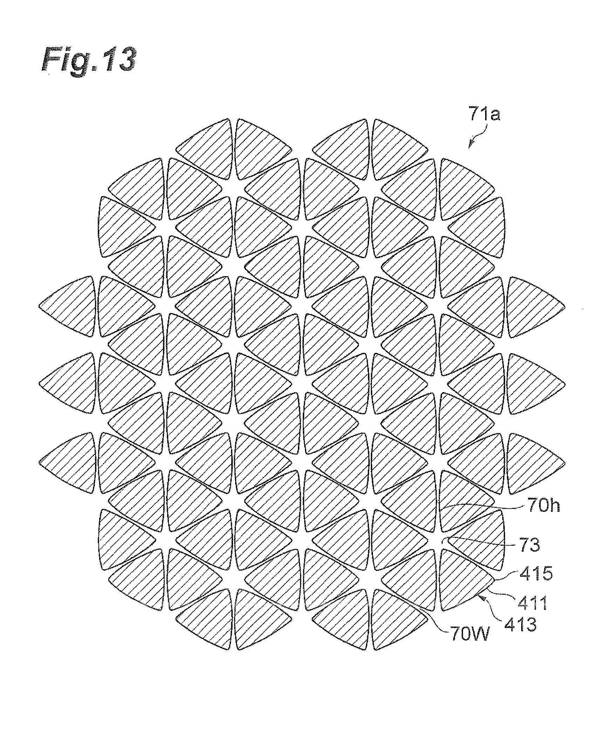

Fig. 13 is a cross-sectional view of Fig. 12 along line XIII-XIII.

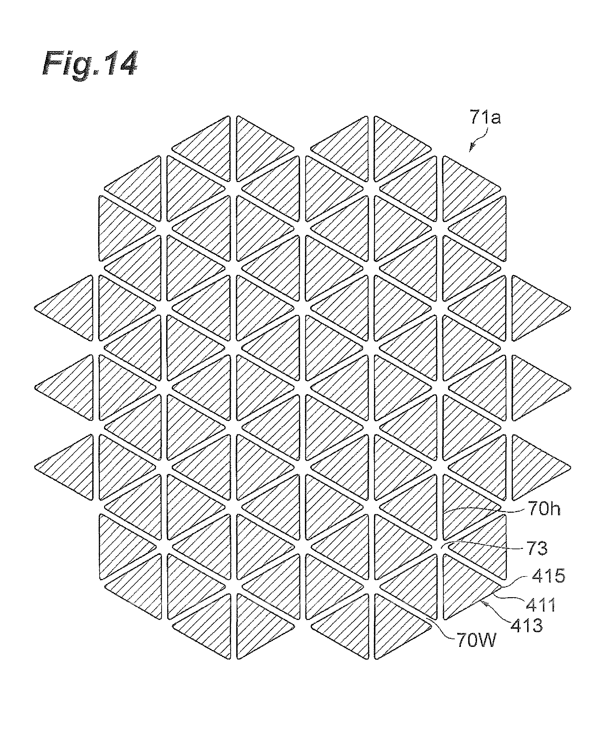

Fig. 14 is a cross-sectional view of Fig. 12 along line XIII-XIII, where a different type of closing jig has been used.

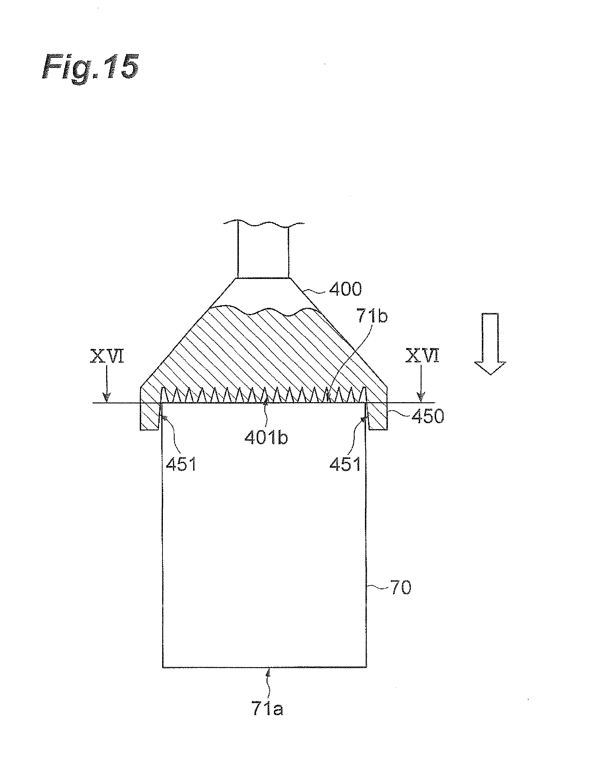

Fig. 15 is a partial cross-sectional view showing the initial state during the closing step on the outlet side of a green honeycomb molded body having hexagonal cells according to the first embodiment.

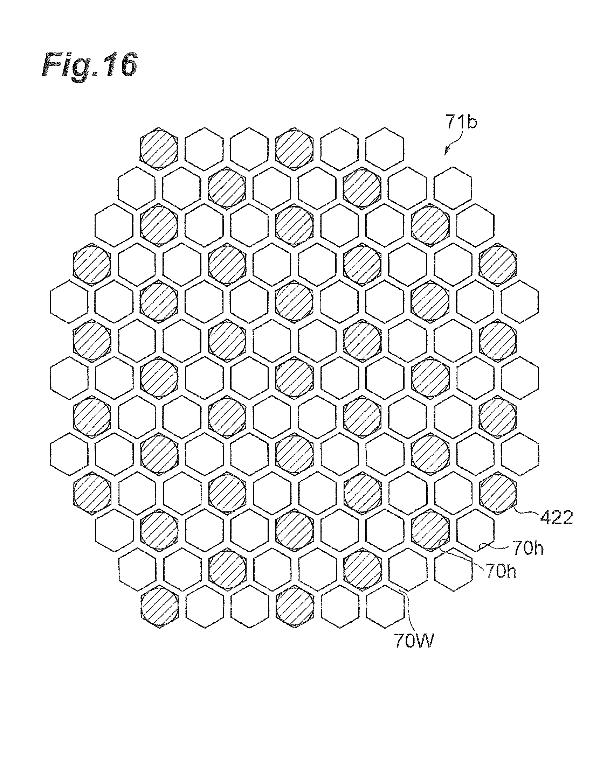

Fig. 16 is a cross-sectional view of Fig. 15 along line XV-XV.

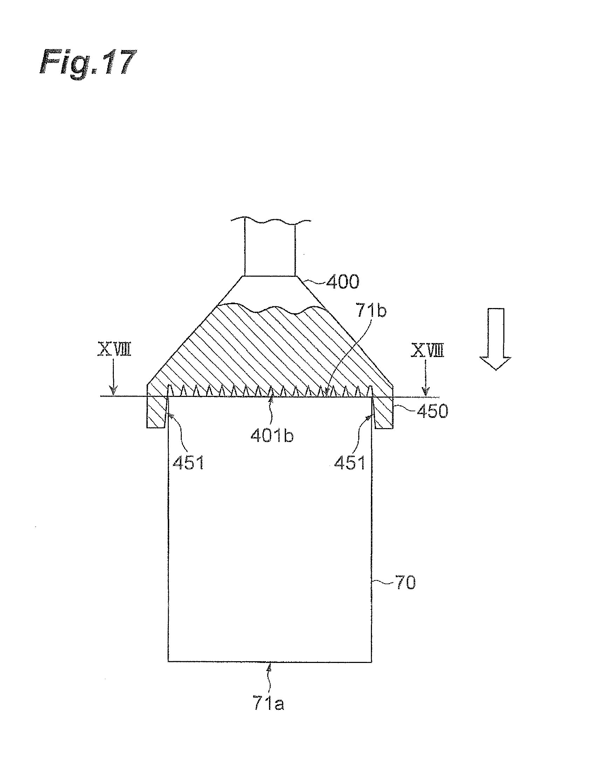

Fig. 17 is a partial cross-sectional view showing the interim state during the closing step of Fig. 15.

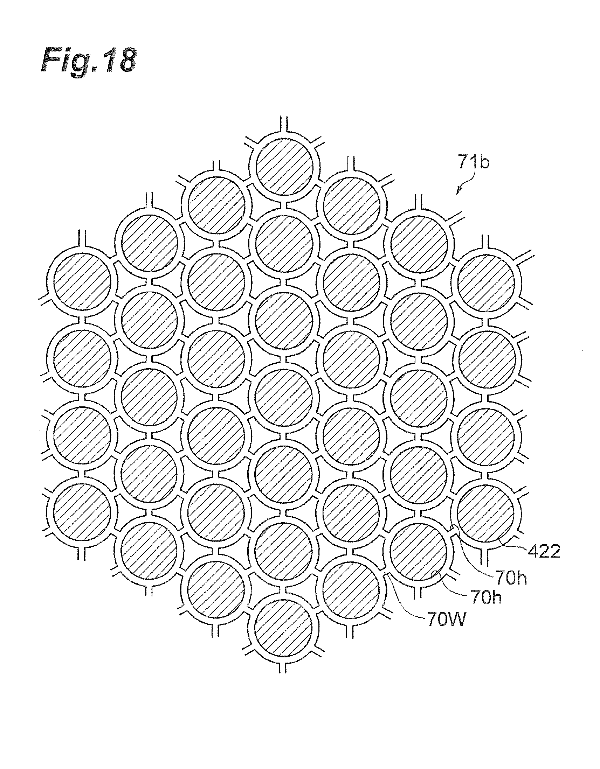

Fig. 18 is a cross-sectional view of Fig. 17 along line XVII-XVII.

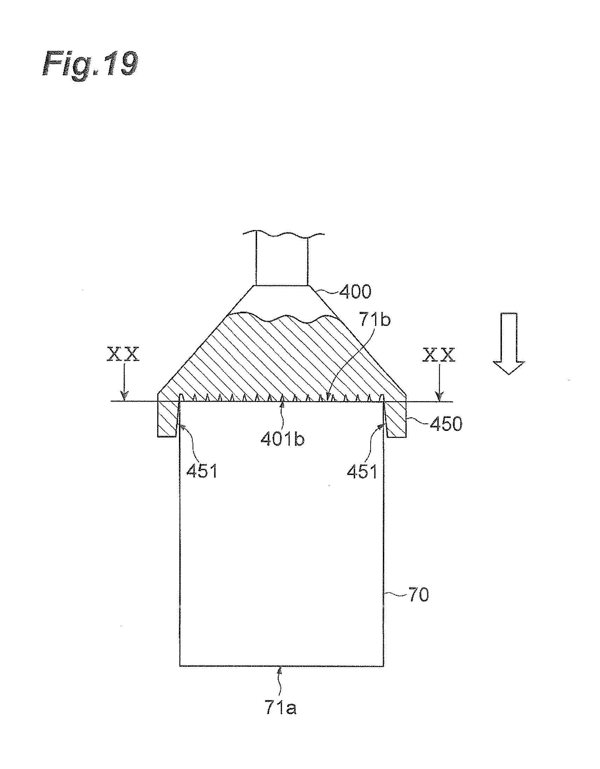

Fig. 19 is a partial cross-sectional view showing the final state during the closing step of Fig. 15.

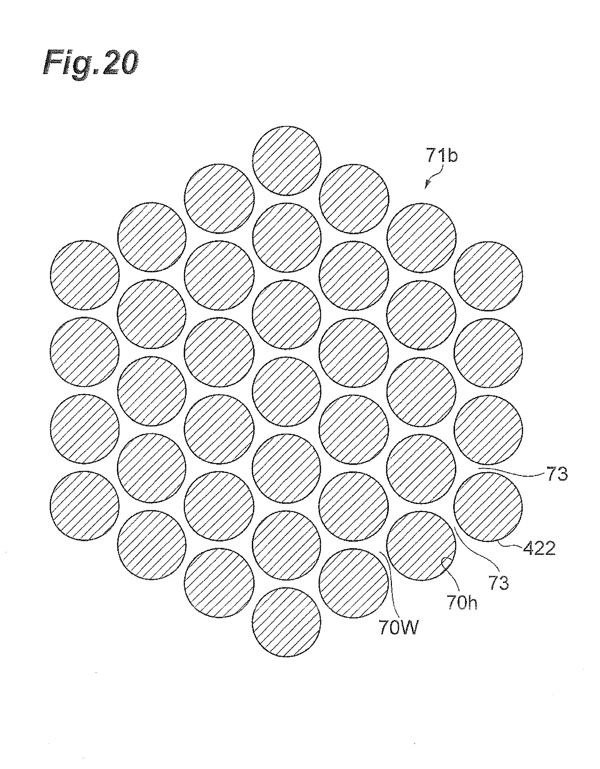

Fig. 20 is a cross-sectional view of Fig. 19 along line XIX-XIX.

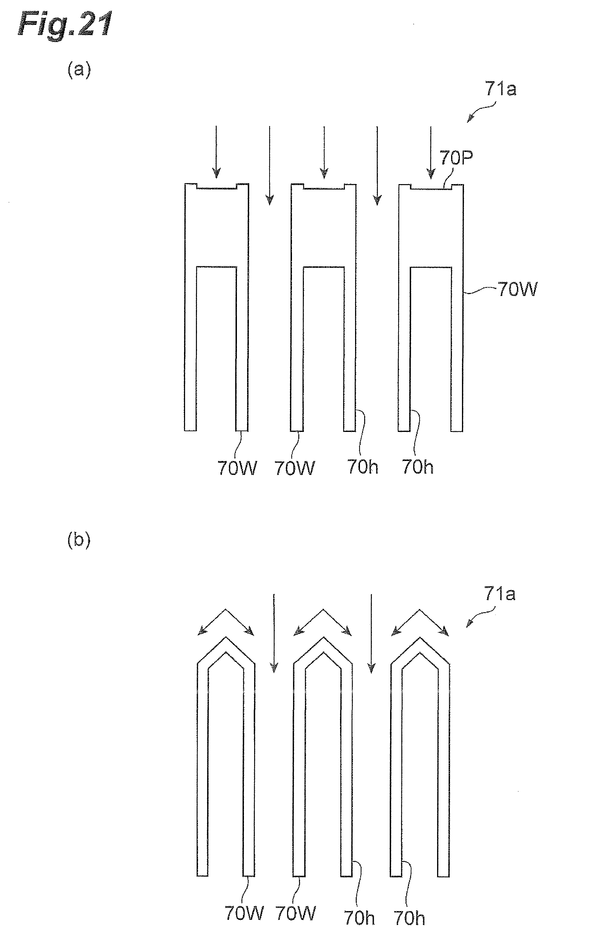

Fig. 21(a) is a diagram showing the flow of gas passing through cells closed according to the prior art, and (b) is a diagram showing the flow of gas passing through cells close according to an embodiment of the invention.

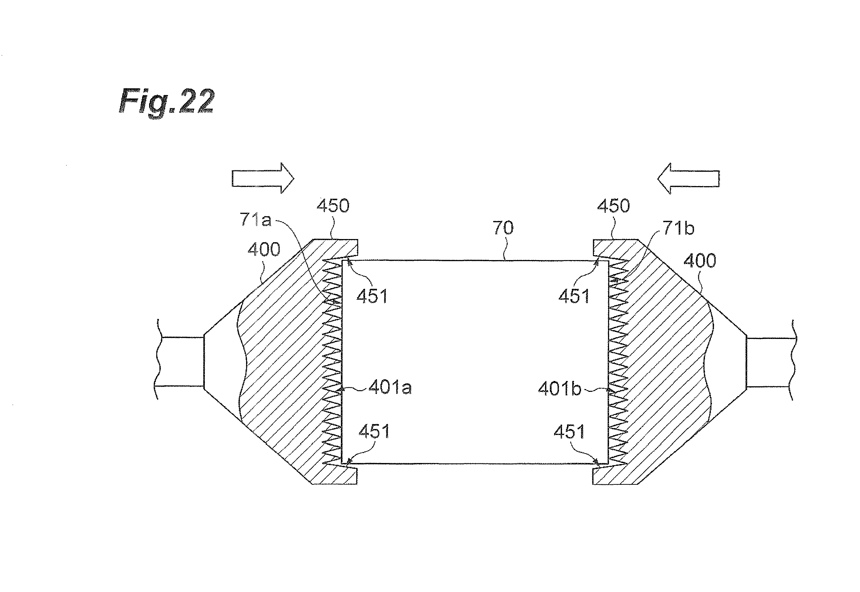

Fig. 22 is a partial cross-sectional view showing the initial state during the closing step of a green honeycomb molded body according to a second embodiment.

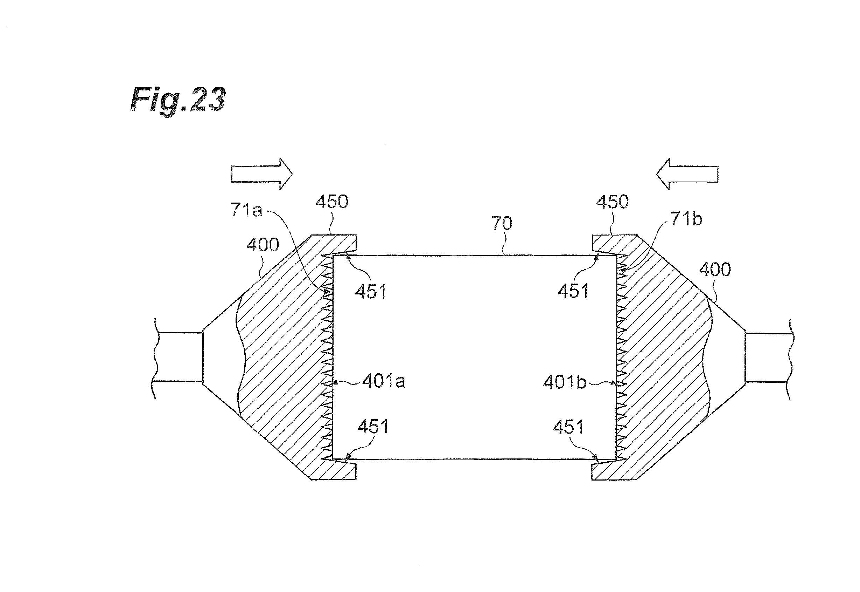

Fig. 23 is a partial cross-sectional view showing the interim state during the closing step of Fig. 22.

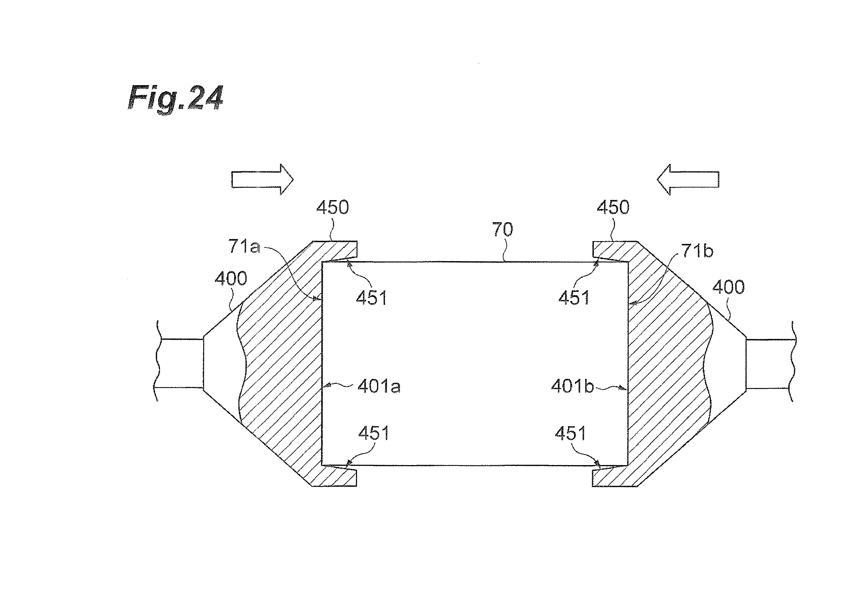

Fig. 24 is a partial cross-sectional view showing the final state during the closing step of Fig. 22.

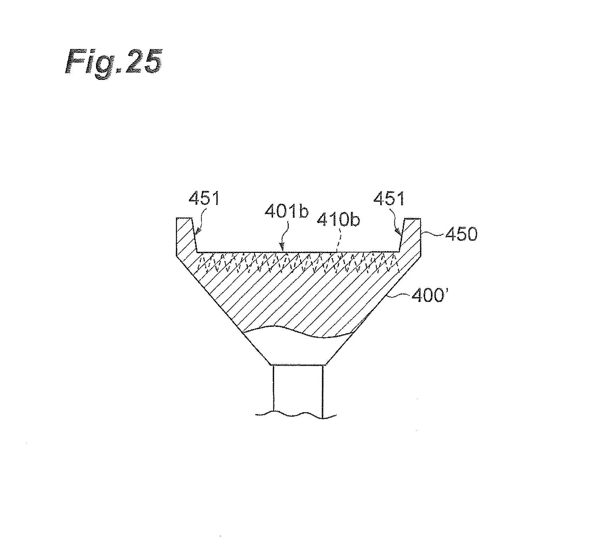

Fig. 25 is a partial cross-sectional view of a closing jig for a green honeycomb molded body according to a third embodiment, the diagram showing the state where the closing protrusions are retracted.

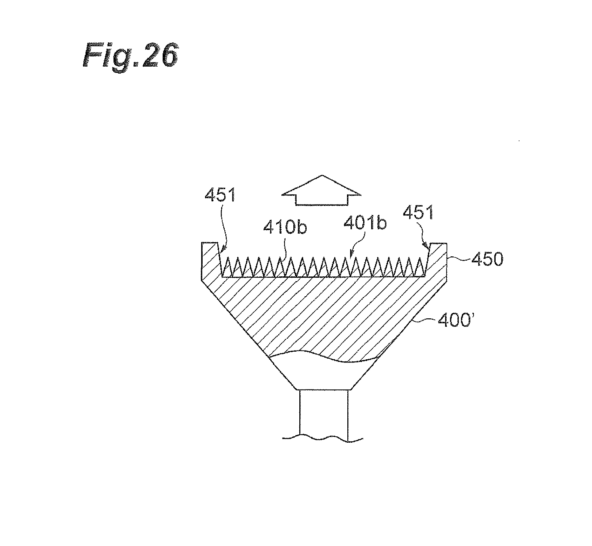

Fig. 26 is a partial cross-sectional view of a closing jig for a green honeycomb molded body according to a third embodiment, the diagram showing the state where the closing protrusions are projecting.

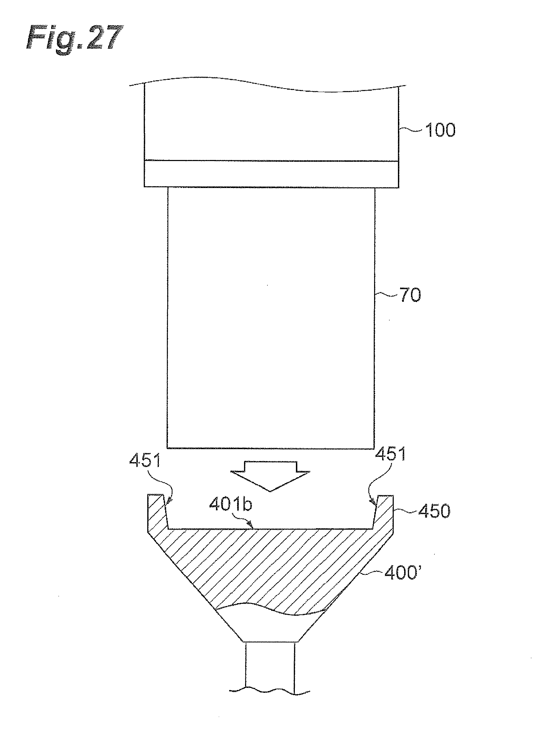

Fig. 27 is a partial cross-sectional view showing the initial state during the cutting step of a green honeycomb molded body according to the third embodiment.

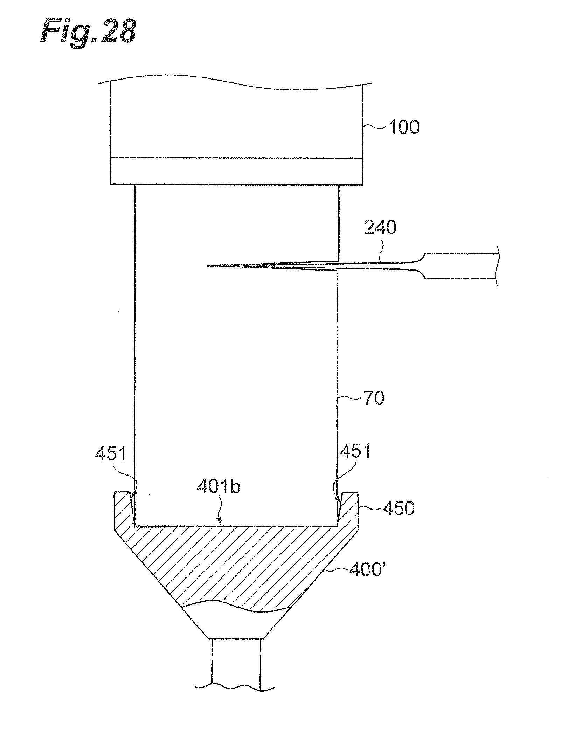

Fig. 28 is a partial cross-sectional view showing the interim state during the cutting step of Fig. 27.

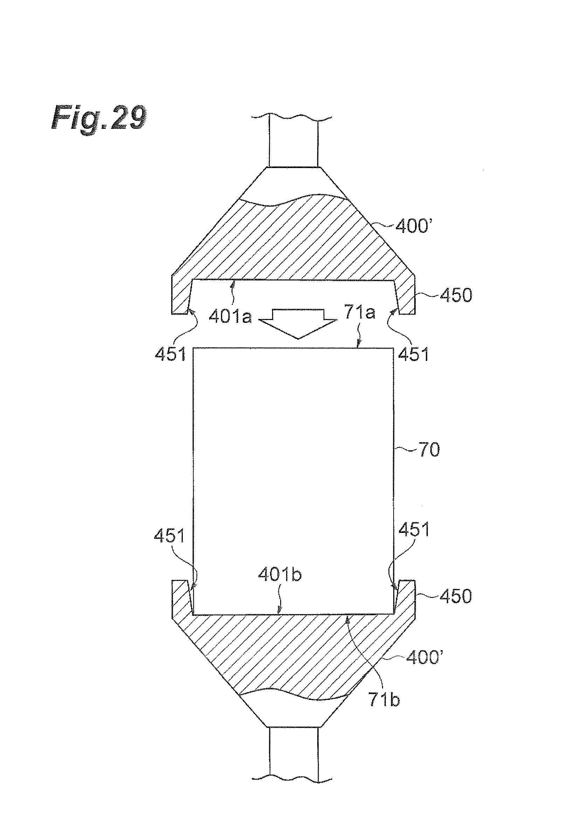

Fig. 29 is a partial cross-sectional view showing the initial state during the closing step of a green honeycomb molded body according to the third embodiment.

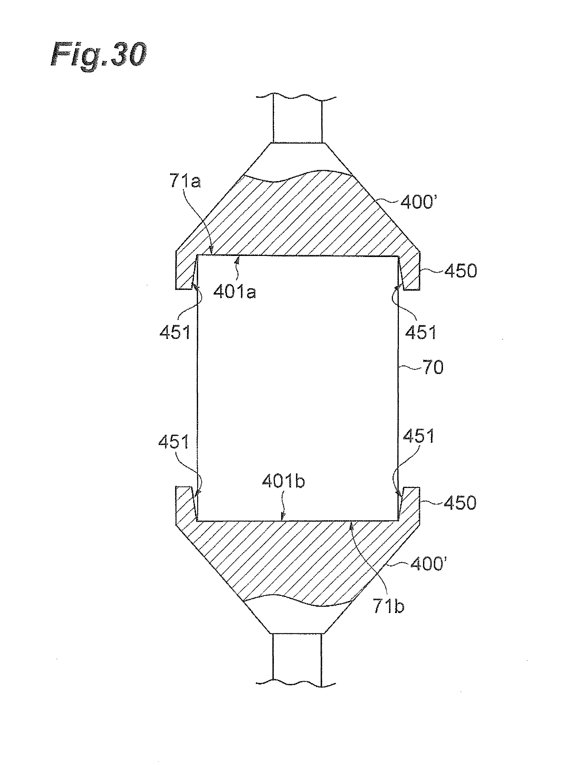

Fig. 30 is a partial cross-sectional view showing the interim state during the closing step of Fig. 29.

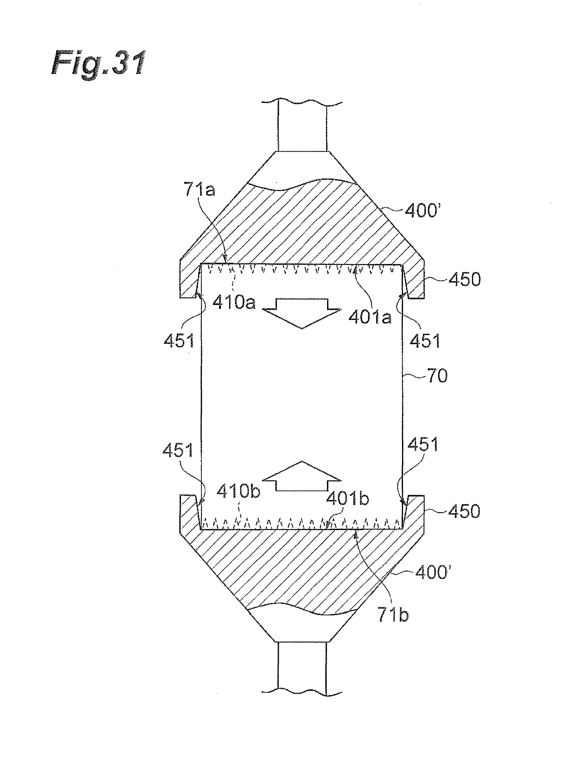

Fig. 31 is a partial cross-sectional view showing a further progressed state during the closing step of Fig. 30.

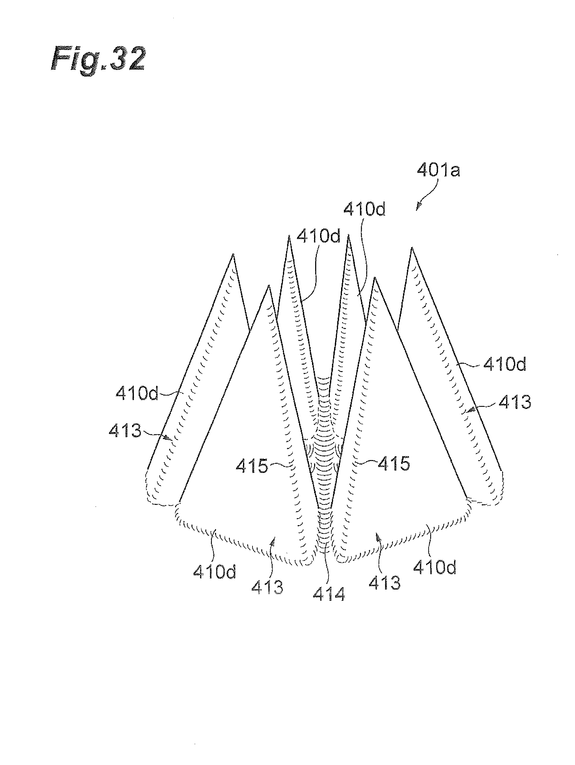

Fig. 32 is a magnified perspective view of a region corresponding to section A of Fig. 2, in a closing jig for the inlet side of a green honeycomb molded body having hexagonal cells according to a fourth embodiment.

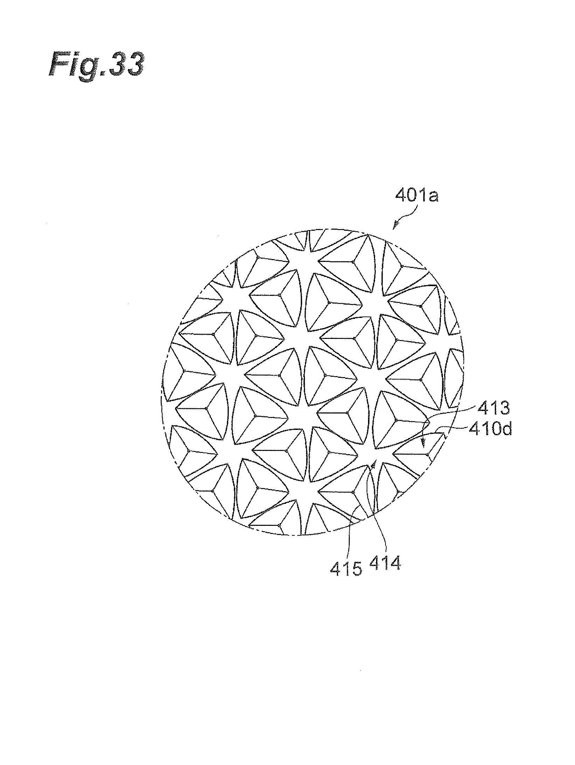

Fig. 33 is a magnified plan view of a region corresponding to section A of Fig. 2, in a closing jig for the inlet side of a green honeycomb molded body having hexagonal cells according to the fourth embodiment.

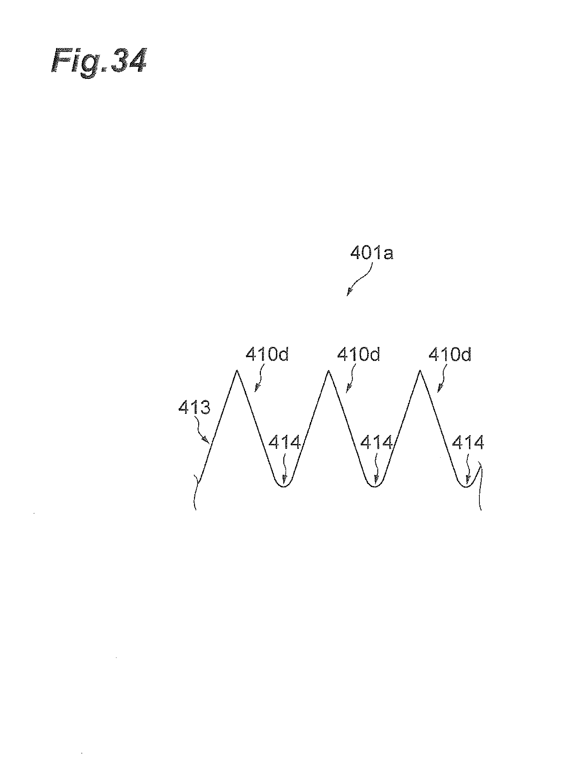

Fig. 34 is a magnified cross-sectional view of a region corresponding to section A of Fig. 2, in a closing jig for the inlet side of a green honeycomb molded body having hexagonal cells according to the fourth embodiment.

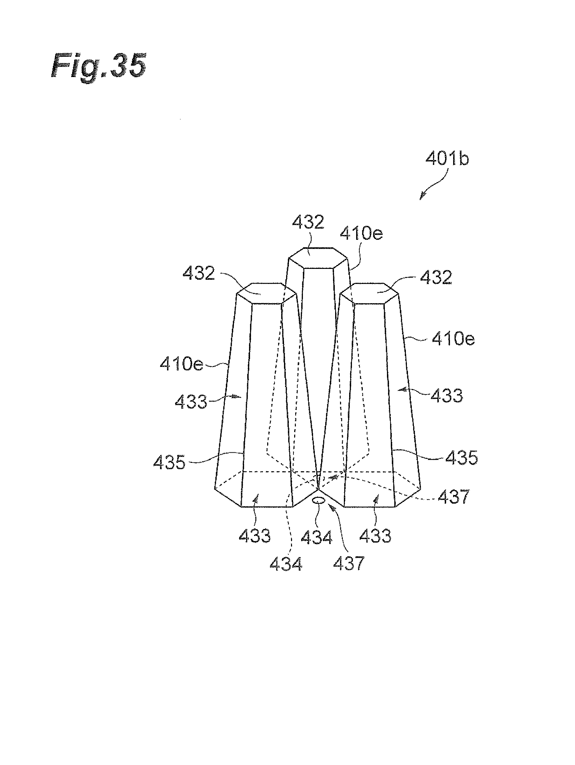

Fig. 35 is a magnified perspective view of a region corresponding to section A of Fig. 2, in a closing jig for the outlet side of a green honeycomb molded body having hexagonal cells according to the fourth embodiment.

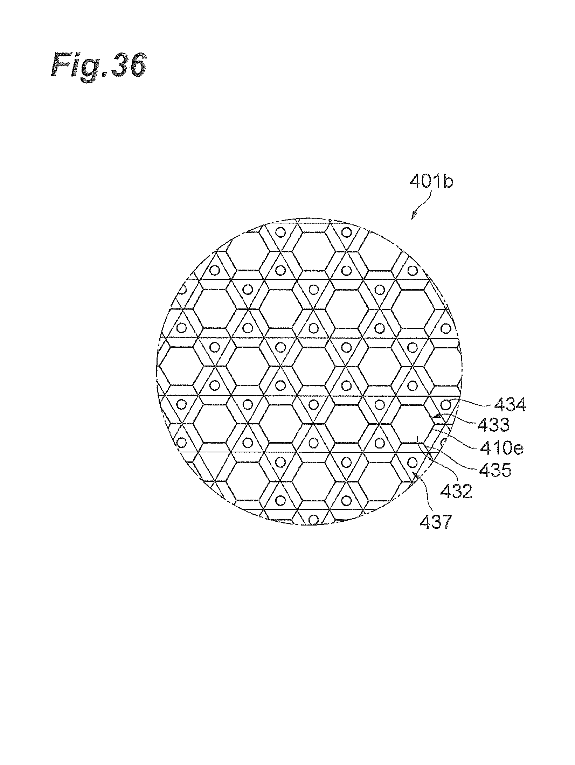

Fig. 36 is a magnified plan view of a region corresponding to section A of Fig. 2, in a closing jig for the outlet side of a green honeycomb molded body having hexagonal cells according to the fourth embodiment.

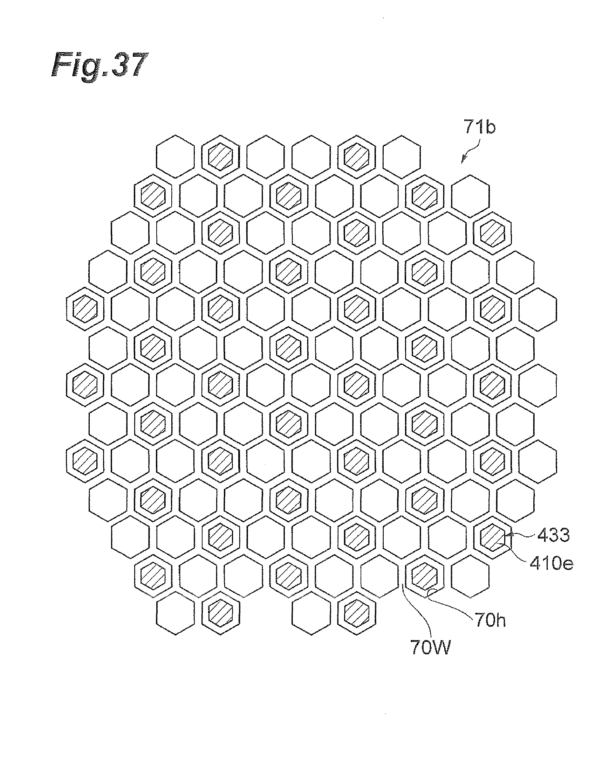

Fig. 37 is a cross-sectional view corresponding to a cross-section of Fig. 15 along line XV-XV, during the closing step on the outlet side according to the fourth embodiment.

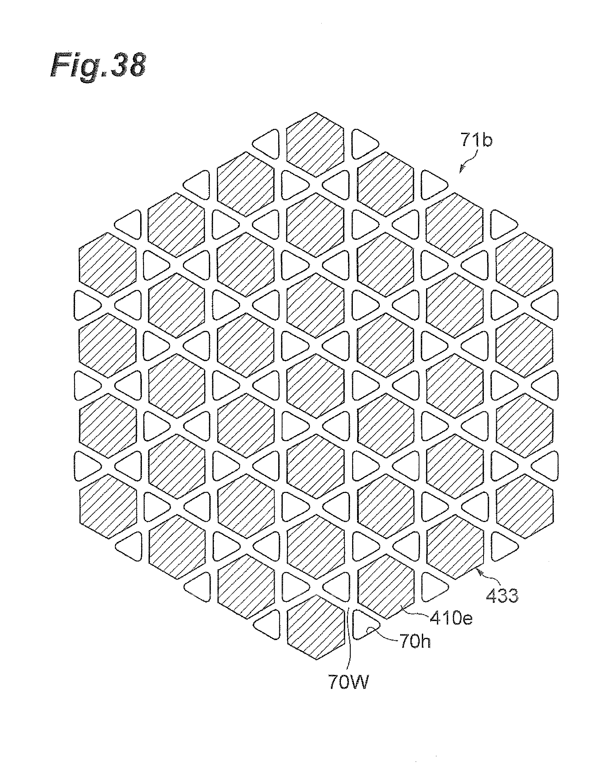

Fig. 38 is a cross-sectional view corresponding to a cross-section of Fig. 17 along line XVII-XVIII, during the closing step on the outlet side according to the fourth embodiment.

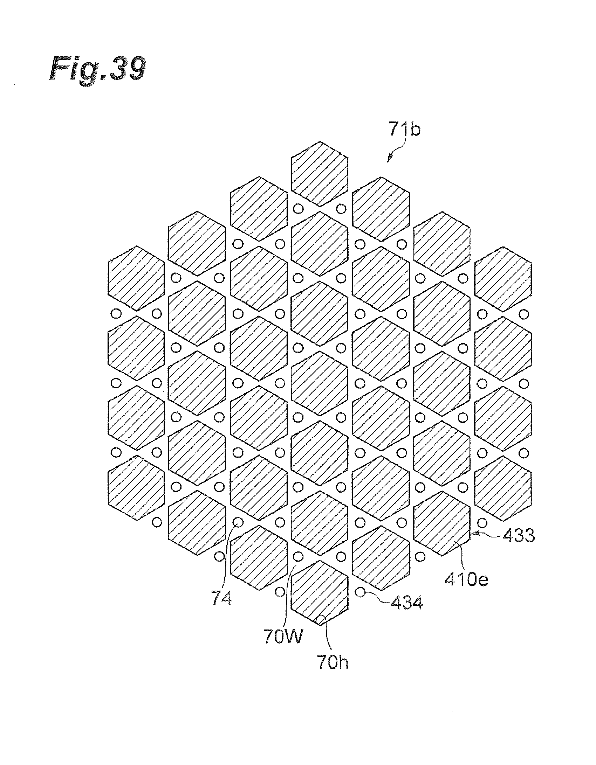

Fig. 39 is a cross-sectional view corresponding to a cross-section of Fig. 19 along line XIX-XIX, during the closing step on the outlet side according to the fourth embodiment.

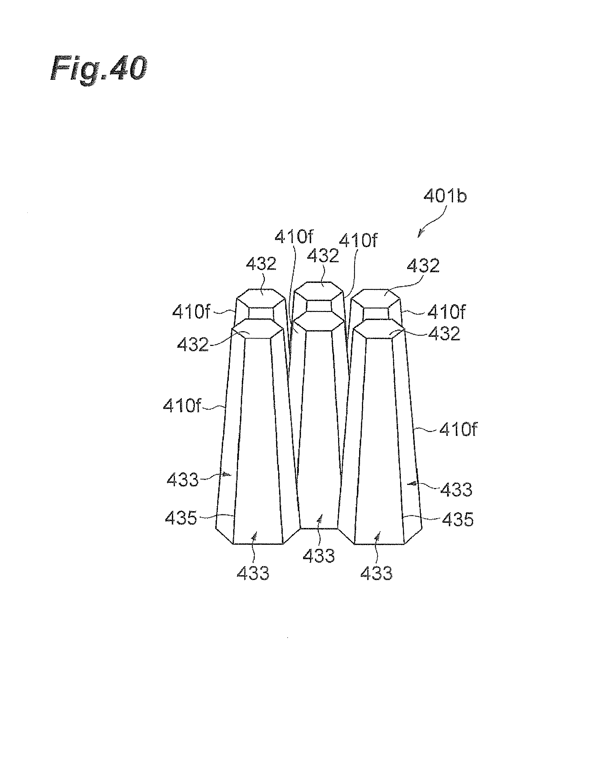

Fig. 40 is a magnified perspective view of a region corresponding to section A of Fig. 2, in a closing jig for the outlet side of a green honeycomb molded body having hexagonal cells according to a fifth embodiment.

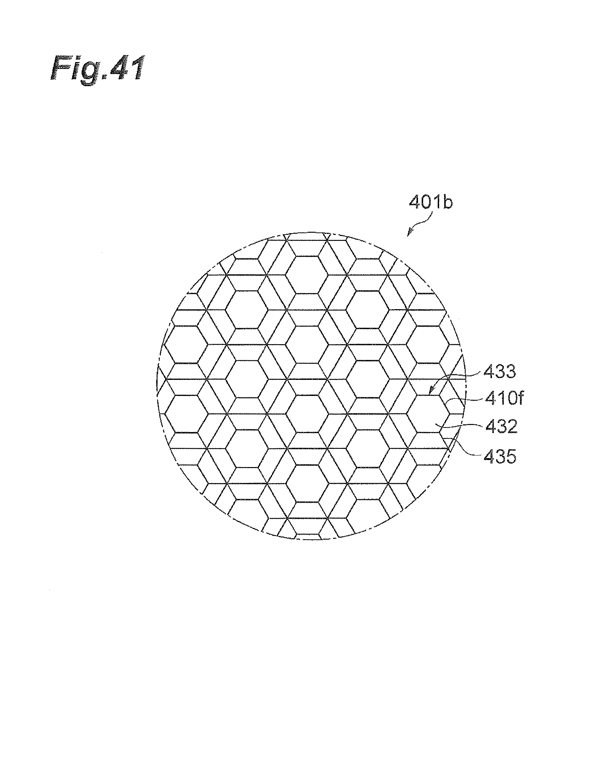

Fig. 41 is a magnified plan view of a region corresponding to section A of Fig. 2, in a closing jig for the outlet side of a green honeycomb molded body having hexagonal cells according to the fifth embodiment.

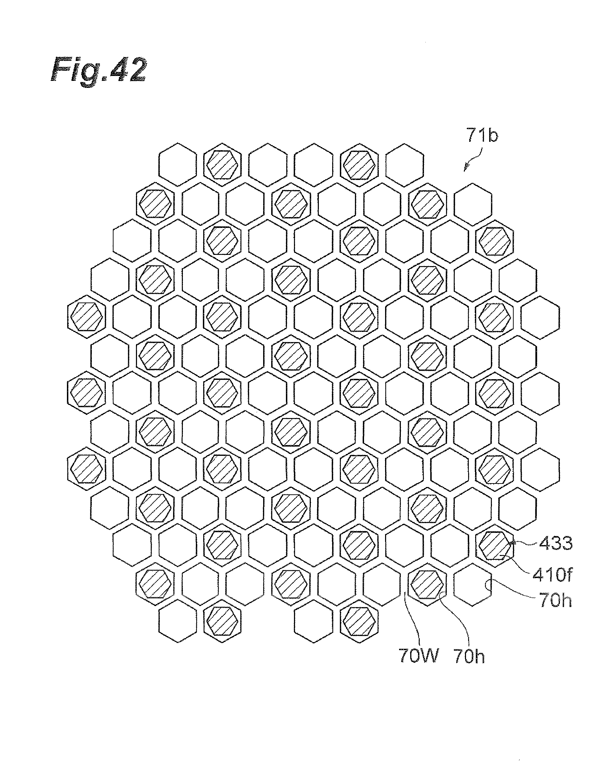

Fig. 42 is a cross-sectional view corresponding to a cross-section of Fig. 15 along line XV-XV, during the closing step on the outlet side according to the fifth embodiment.

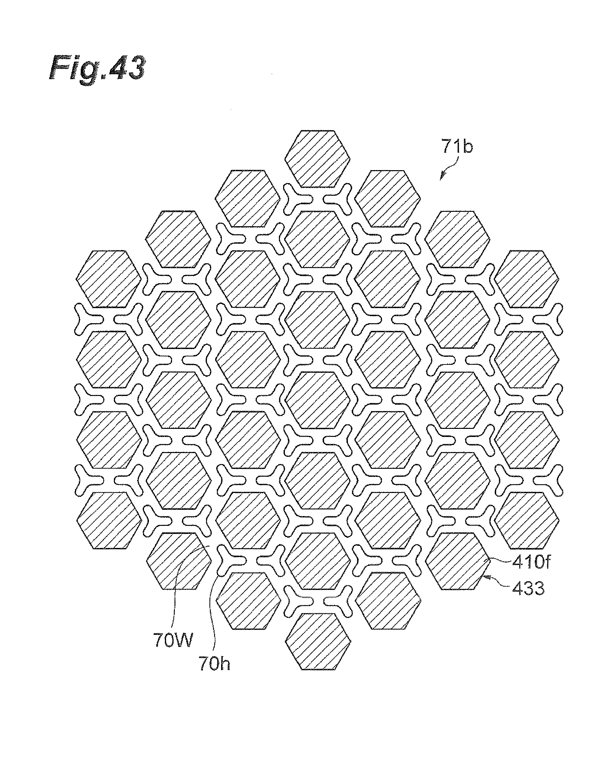

Fig. 43 is a cross-sectional view corresponding to a cross-section of Fig. 17 along line XVII-XVII, during the closing step on the outlet side according to the fifth embodiment.

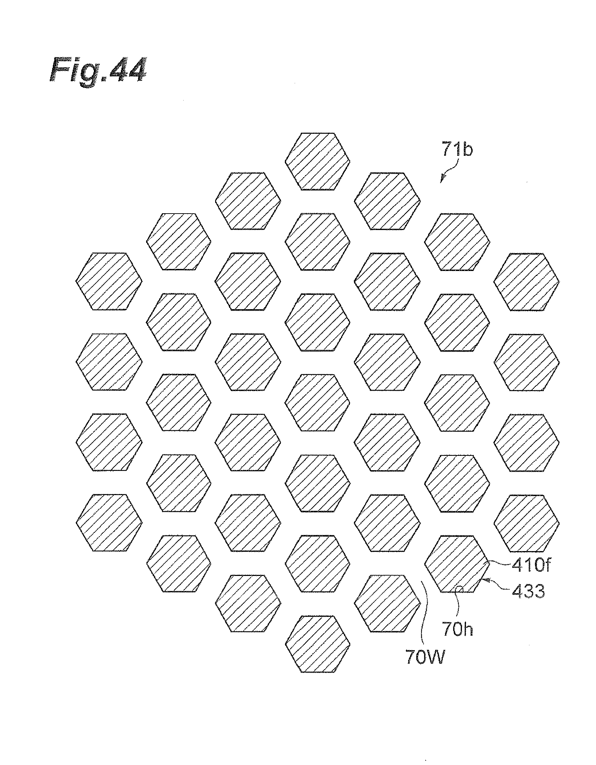

Fig. 44 is a cross-sectional view corresponding to a cross-section of Fig. 19 along line XIX-XIX, during the closing step on the outlet side according to the fifth embodiment.

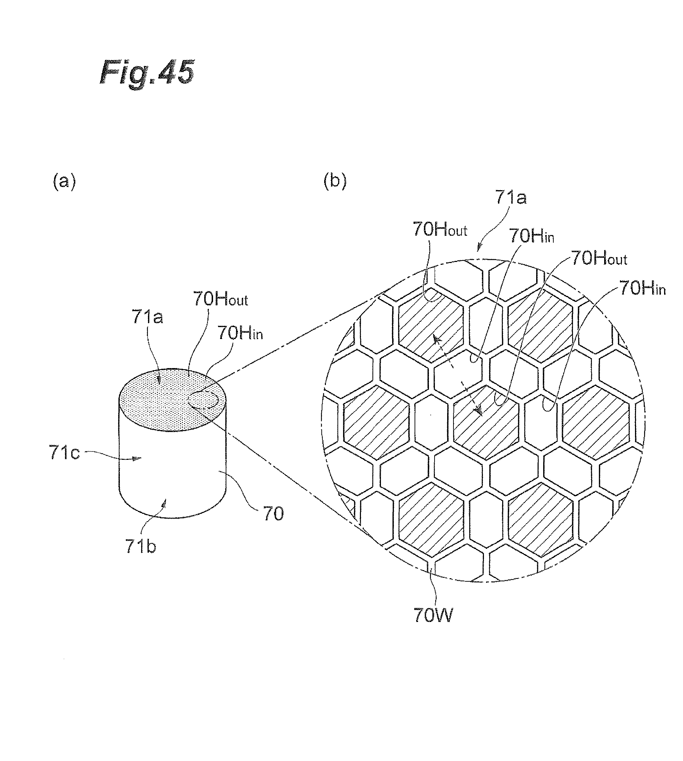

Fig. 45(a) is a perspective view of a green honeycomb molded body having hexagonal cells with different open areas on the inlet side and the outlet side, before closing, and (b) is a partial magnified view of (a).

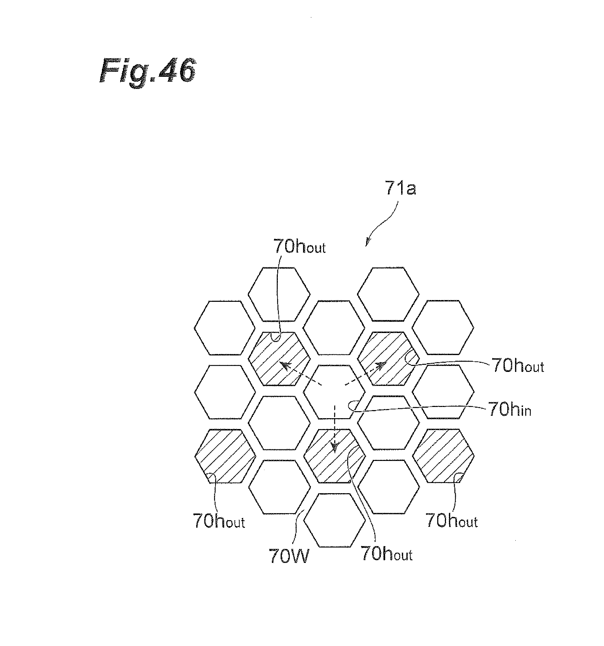

Fig. 46 is a diagram showing hexagonal cells with the same open area on the inlet side and the outlet side.

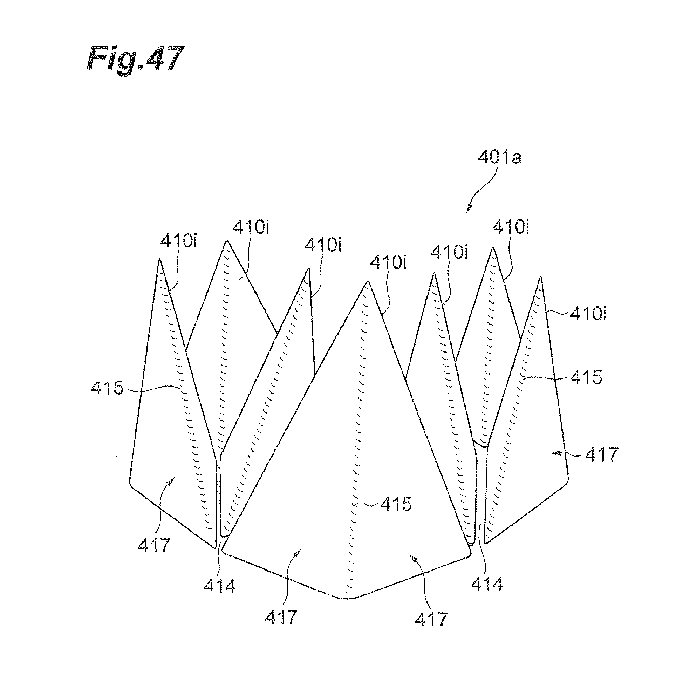

Fig. 47 is a magnified perspective view of a region corresponding to section A of Fig. 2, in a closing jig for the inlet side of a green honeycomb molded body having hexagonal cells with different open areas on the inlet side and the outlet side, according to a sixth embodiment.

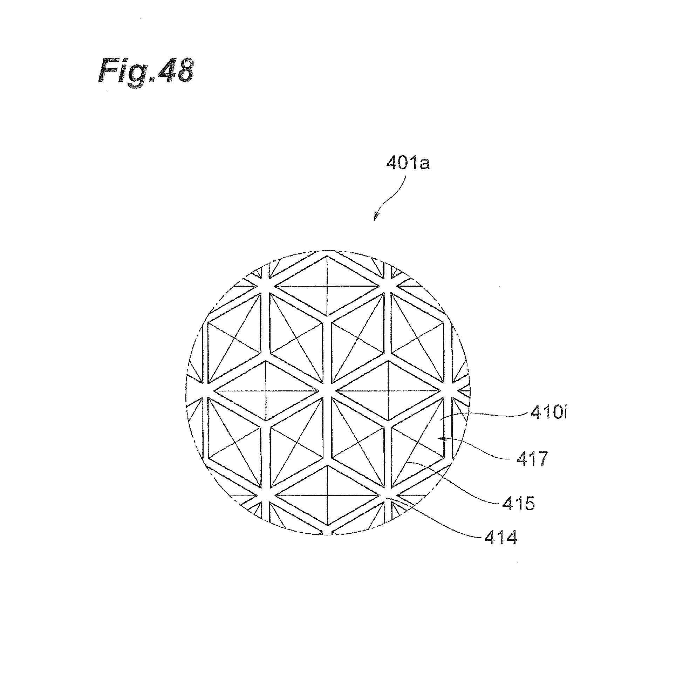

Fig. 48 is a magnified plan view of a region corresponding to section A of Fig. 2, in a closing jig for the inlet side of a green honeycomb molded body having hexagonal cells with different open areas on the inlet side and the outlet side, according to the sixth embodiment.

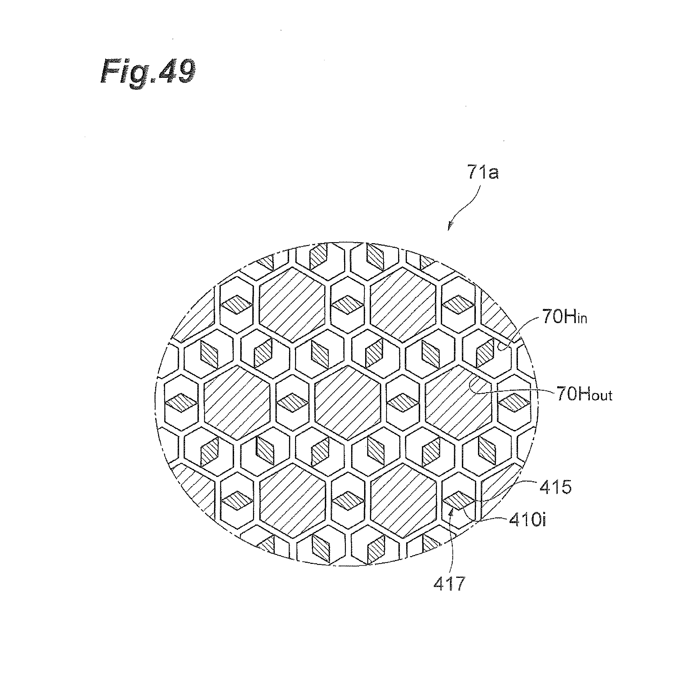

Fig. 49 is a cross-sectional view corresponding to a cross-section of Fig. 8 along line IX-IX, during the closing step on the inlet side according to the sixth embodiment.

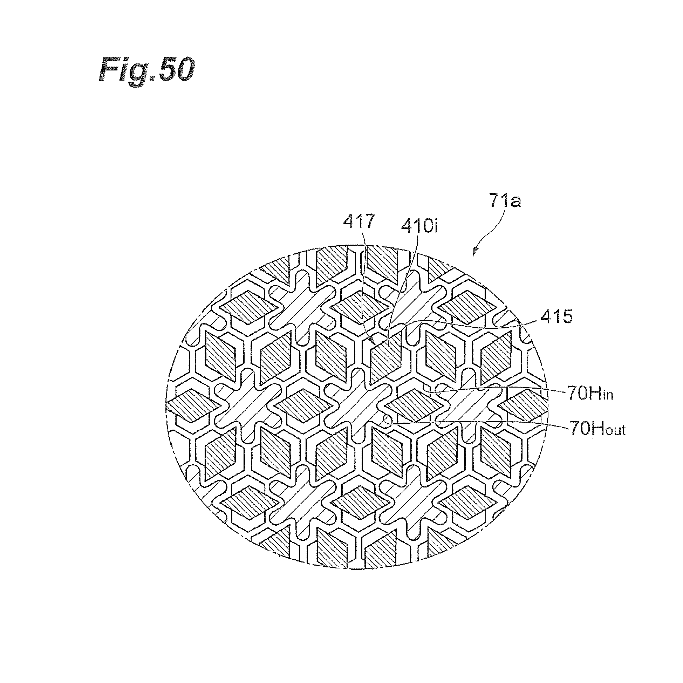

Fig. 50 is a cross-sectional view corresponding to a cross-section of Fig. 10 along line XI-XI, during the closing step on the inlet side according to the sixth embodiment.

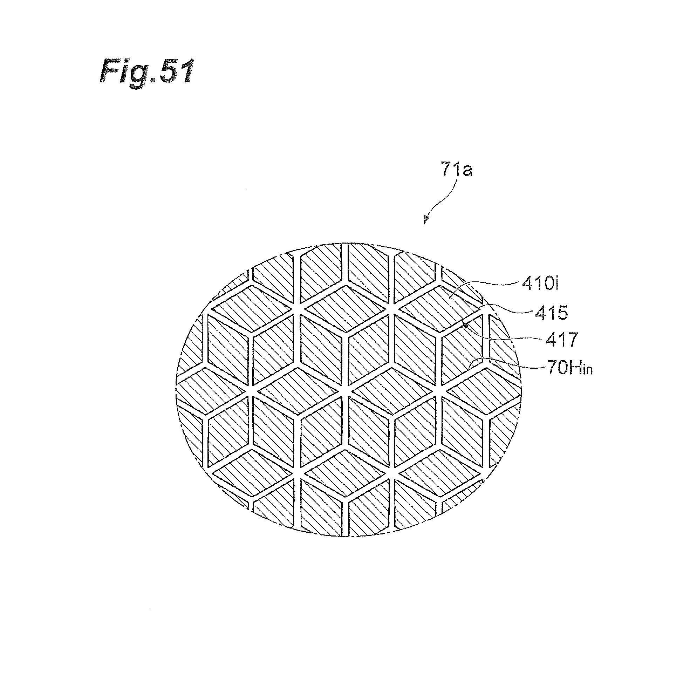

Fig. 51 is a cross-sectional view corresponding to a cross-section of Fig. 12 along line XIII-XIII, during the closing step on the inlet side according to the sixth embodiment.

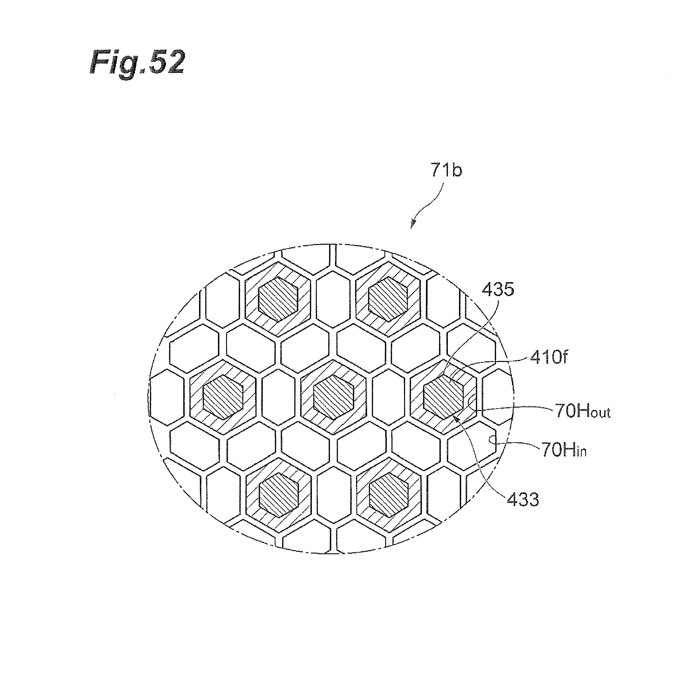

Fig. 52 is a cross-sectional view corresponding to a cross-section of Fig. 15 along line XV-XV, during the closing step on the outlet side according to the sixth embodiment.

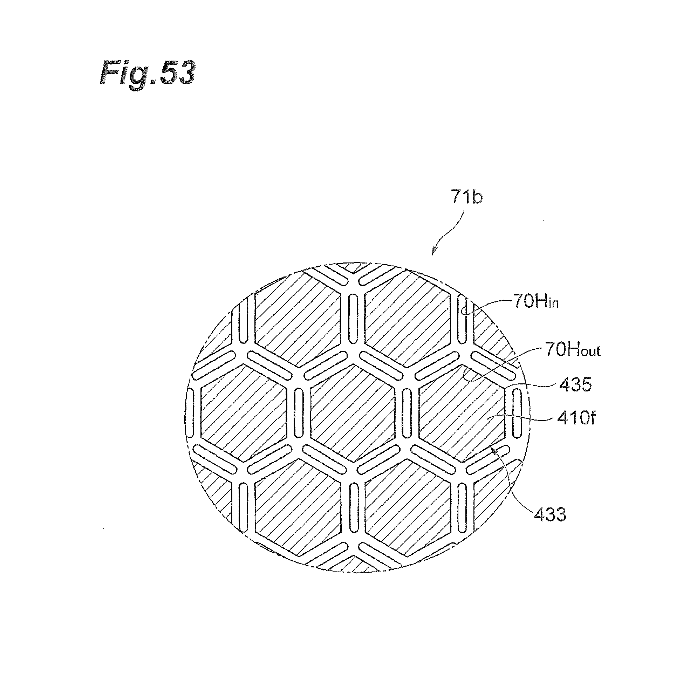

Fig. 53 is a cross-sectional view corresponding to a cross-section of Fig. 17 along line XVII-XVII, during the closing step on the outlet side according to the sixth embodiment.

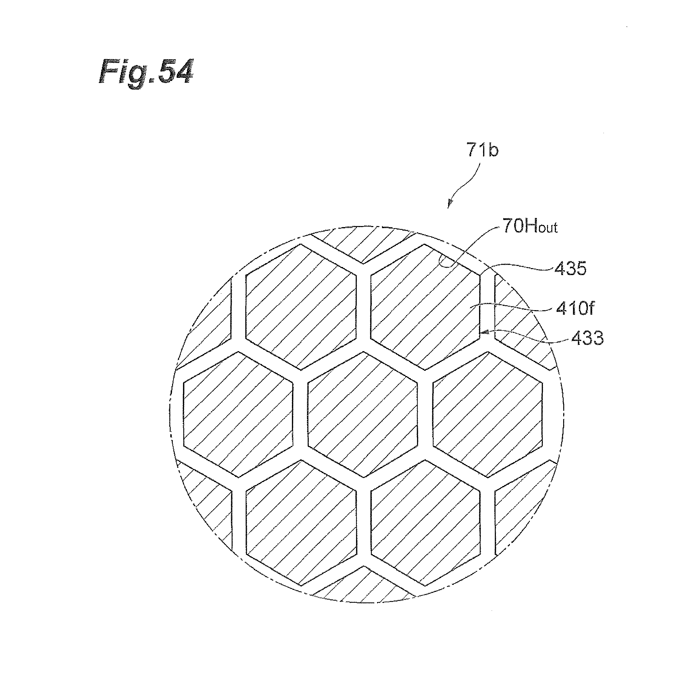

Fig. 54 is a cross-sectional view corresponding to a cross-section of Fig. 19 along line XIX-XIX, during the closing step on the outlet side according to the sixth embodiment.

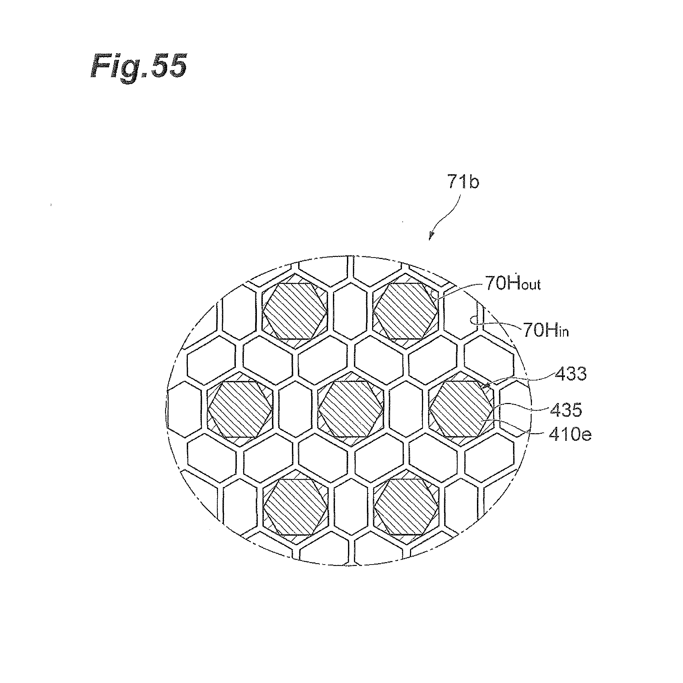

Fig. 55 is a cross-sectional view corresponding to a cross-section of Fig. 15 along line XV-XV, during the closing step on the outlet side, according to a different aspect of the sixth embodiment.

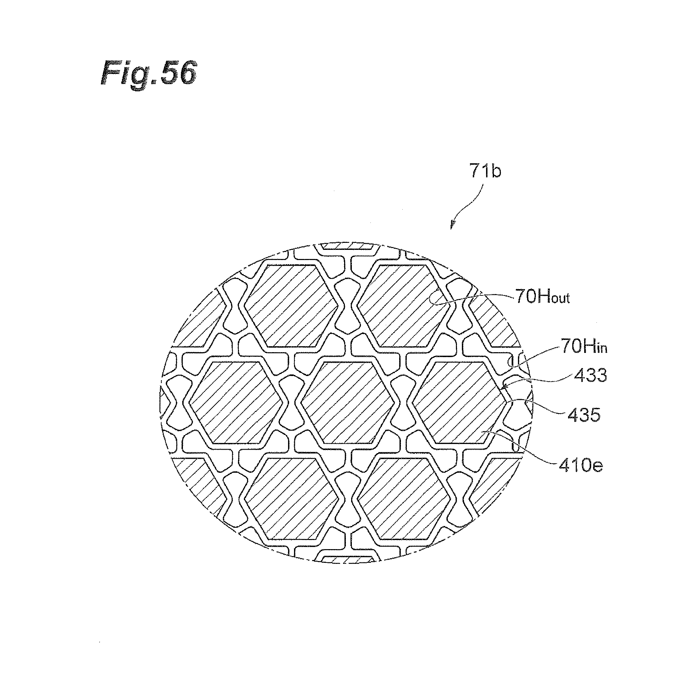

Fig. 56 is a cross-sectional view corresponding to a cross-section of Fig. 17 along line XVII-XVII, during the closing step on the outlet side according to a different aspect of the sixth embodiment.

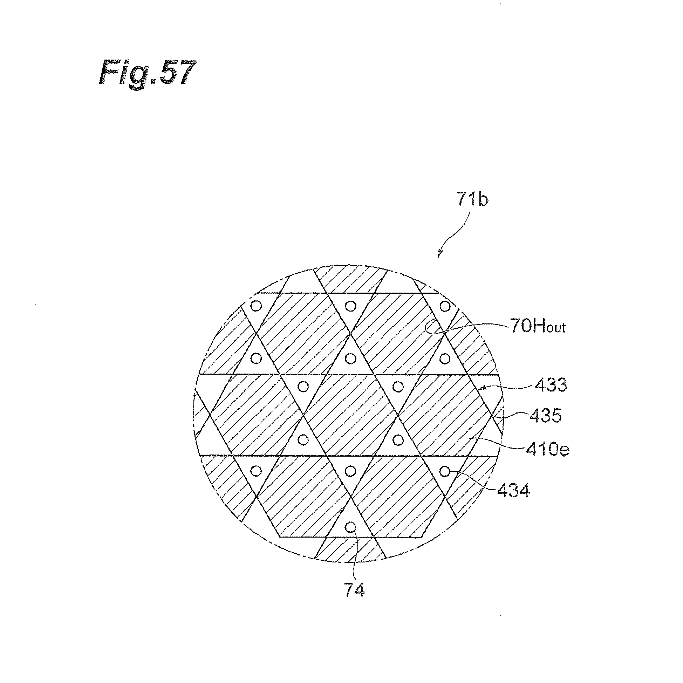

Fig. 57 is a cross-sectional view corresponding to a cross-section of Fig. 19 along line XIX-XIX, during the closing step on the outlet side according to a different aspect of the sixth embodiment.

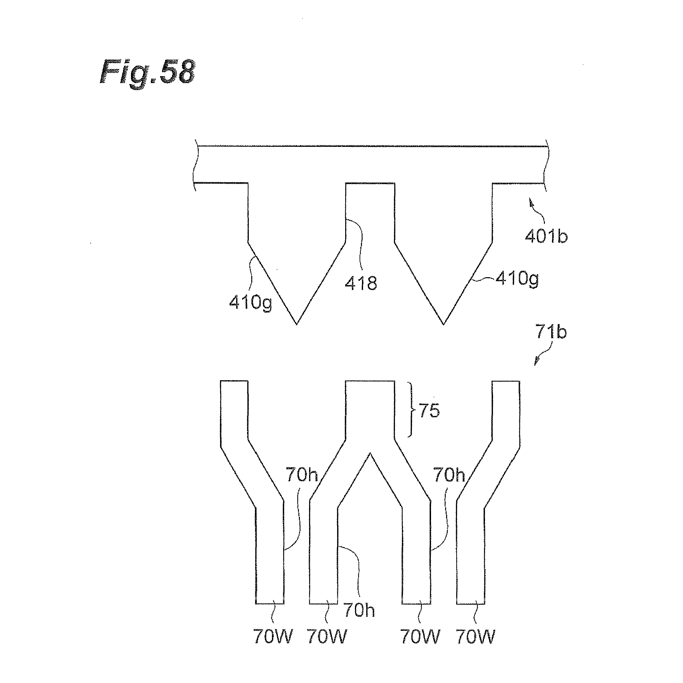

Fig. 58 is a longitudinal section diagram showing a closing jig and a green honeycomb molded body closed by the closing jig, according to a seventh embodiment.

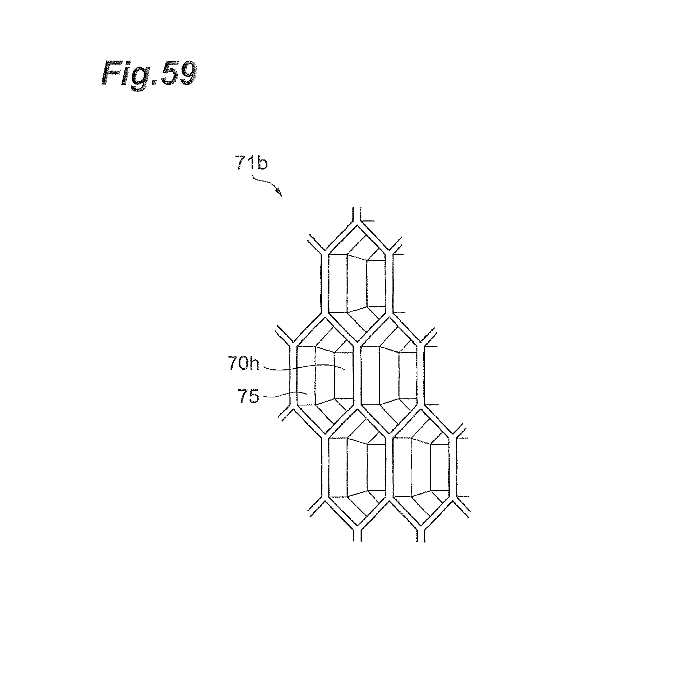

Fig. 59 is a perspective view of a closed green honeycomb molded body according to the seventh embodiment.

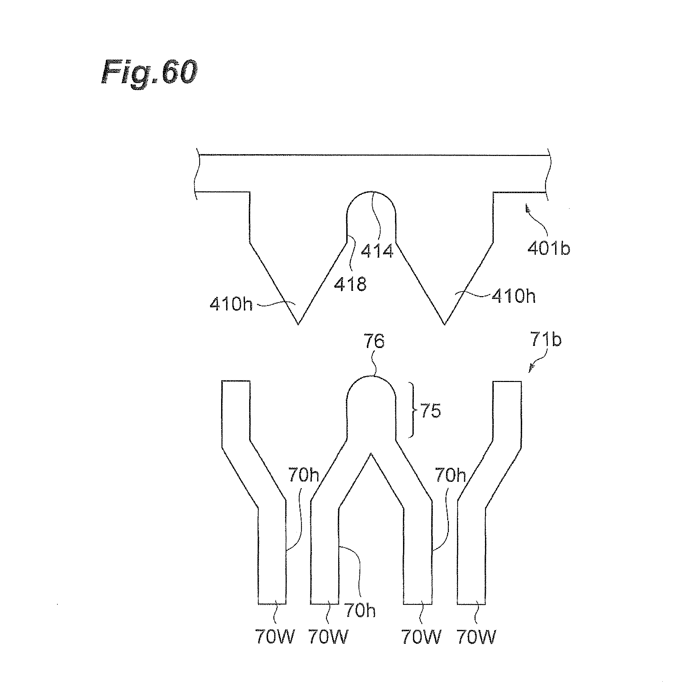

Fig. 60 is a longitudinal section diagram showing a closing jig and a green honeycomb molded body closed by the closing jig, according to an eighth embodiment.

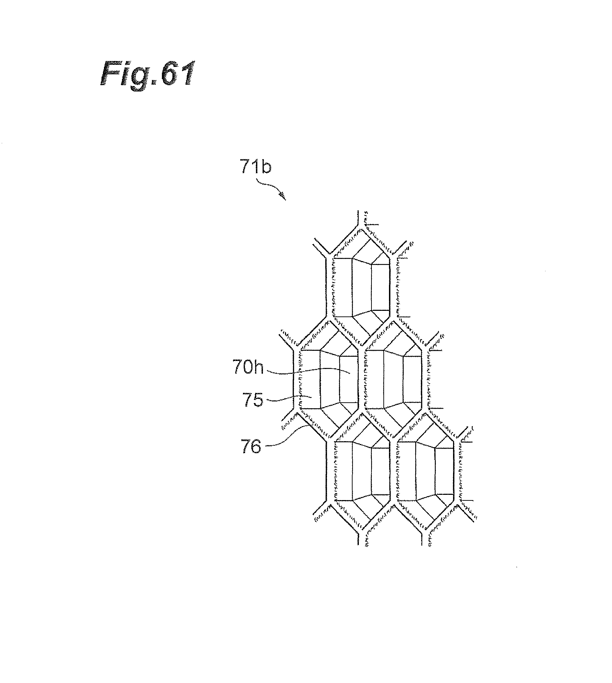

Fig. 61 is a perspective view of a closed green honeycomb molded body according to the eighth embodiment.

### Description of Embodiments

Embodiments of the invention will now be explained in detail, with reference to the accompanying drawings.

### [First embodiment]

### (Green honeycomb molded body (hexagon cells))

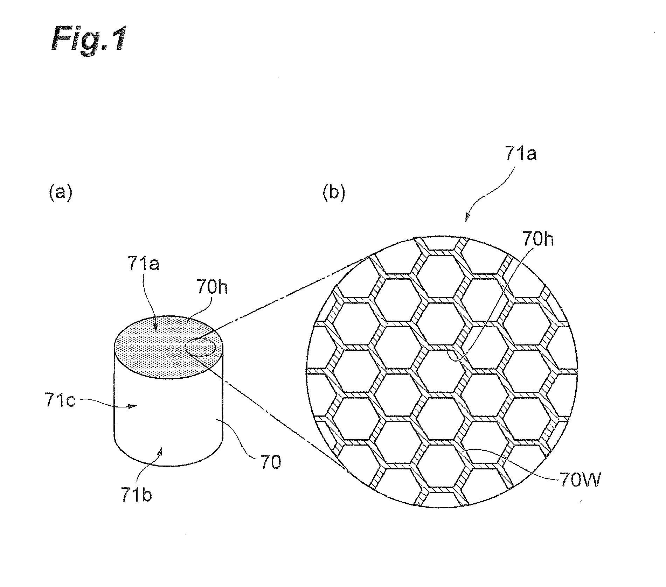

First, a green honeycomb molded body that is to be worked according to a first embodiment of the invention will be described. As shown in Fig. 1(a), the green honeycomb molded body 70 of this embodiment has, for example, a top face 71 a, a bottom face 71 b and a side face 71 c, and a circular column in which hexagonal cells 70h, which are a plurality of hexagonal through-holes on the top face 71a and the bottom face 71b, are aligned essentially parallel. The green honeycomb molded body 70 is an uncalcined molded body, which is to later become a porous ceramic by firing. Furthermore, there are no particular restrictions on the length of the hexagonal cells 70h of the green honeycomb molded body 70 in the direction of their extension, and it may be 40 to 400 mm, for example. There are also no particular restrictions on the outer diameter of the green honeycomb molded body 70, and it may be 10 to 360 mm, for example.

Each of the hexagonal cells 70h are separated by partitions 70W extending essentially parallel to the central axis of the green honeycomb molded body 70. The thickness of the partitions 70W may be 0.8 mm or smaller or 0.5 mm or smaller, and may be 0.1 mm or larger. The outer shape of the green honeycomb molded body 70 is not restricted to a circular columnar shape, and may instead be elliptic cylindrical, angular columnar (for example, regular polygonal columnar such as triangular columnar, square columnar, hexagonal columnar or octagonal columnar, or a triangular columnar, quadrilateral columnar, hexagonal columnar or octagonal columnar shape other than regular polygonal columnar) or the like, but this embodiment will be explained as a case where the honeycomb structure 70 is circular columnar. Also, the example for this embodiment is a green honeycomb molded body 70 having hexagonal cells 70h with regular hexagonal through-holes, but it may instead be a green honeycomb molded body 70 having cells in which the through-holes have hexagonal shapes other than regular hexagons, or hexagons of different sizes.

Such a green honeycomb molded body 70 is manufactured by extrusion molding a ceramic composition with an extrusion molding machine. In this case, for preparation of the ceramic composition, there are prepared an inorganic compound source powder as the ceramic raw material, an organic binder, a solvent, and additives which are to be added as necessary.

The inorganic compound source powder may be one containing two or more selected from the group consisting of aluminum source powder, magnesium source powder, silicon source powder and titanium source powder, or it may be one containing one or more from among silicon carbide source powder, silicon nitride source powder and aluminum nitride source powder. Also, for increased heat resistance and mechanical strength of the product, there may be added to the inorganic compound source powder any one or more from among carbon source powder, zirconium source powder, molybdenum source powder and calcium source powder. The heat resistance can be increased by including aluminum source powder, magnesium source powder, titanium source powder or silicon source powder. Examples of organic binders include celluloses such as methyl cellulose, carboxylmethyl cellulose, hydroxyalkylmethyl cellulose and sodium carboxylmethyl cellulose; alcohols such as polyvinyl alcohol; and ligninsulfonic acid salts. Examples of additives include pore-forming agents, lubricants, plasticizers, dispersing agents and solvents.

The prepared raw materials are mixed with a kneader or the like to obtain a raw mixture, and the obtained raw mixture is extruded from an extrusion molding machine having an outlet opening corresponding to the cross-sectional shapes of the partitions 70W, to manufacture a green honeycomb molded body according to this embodiment.

### (Closing jig)

A closing jig according to this embodiment will now be described. For this embodiment, the hexagonal cells 70h are closed in different manners on either end face of the green honeycomb molded body 70 that has the hexagonal cells 70h. The closing jig for closing of the top face 71a which is to be the exhaust gas supply side (the inlet side) when the green honeycomb molded body 70 has been calcined as a diesel particulate filter, will be explained first.

As shown in Fig. 2, the closing jig 400 of this embodiment has a closing face 401 a for closing of the green honeycomb molded body 70, and a support socket section 450 in which the end of the green honeycomb molded body 70 is fitted. On the closing face 401 a there are provided a plurality of closing protrusions 410a for contact bonding of the partitions 70W together to close the hexagonal cells 70h, by being situated at locations corresponding to some of the hexagonal cells 70h and being inserted in some of the hexagonal cells 70h. The support socket section 450 consists of a cylindrical recess corresponding to the diameter of the green honeycomb molded body 70 that is to be closed. The inner peripheral surface of the support socket 450 has a slanted surface 451 such that the inner diameter of the support socket section 450 spreads out from the closing face 401a, so as to easily fit the end of the green honeycomb molded body 70.

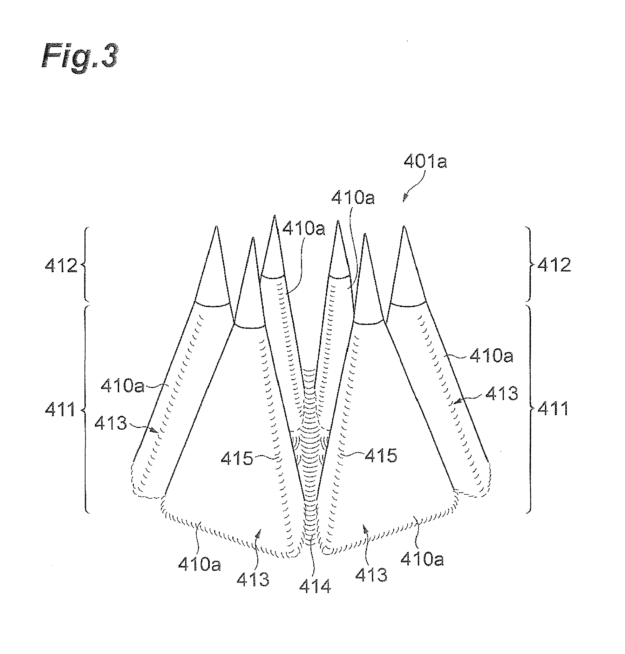

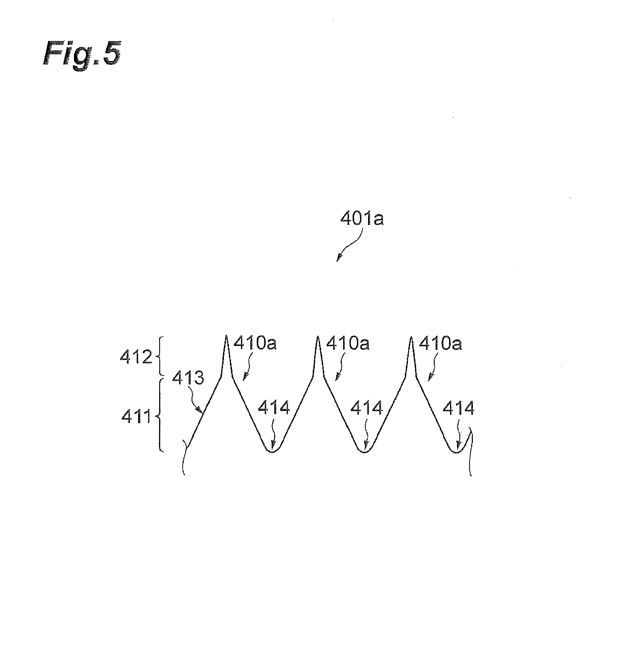

As shown in Figs. 3 to 5, which are magnified views of section A of Fig. 2, the closing protrusions 410a have triangular pyramidal bases 411 and conical tips 412. The triangular pyramidal bases 411 are situated at the bases of the closing protrusions 410a and protrude from the closing face 401 a. The triangular pyramidal bases 411 are truncated triangular pyramids, from which analogously smaller triangular pyramids have been removed from triangular pyramids having larger apex angles than the conical tips 412. The conical tips 412 are the tips of the closing protrusions 410a, and are located on top of the triangular pyramidal bases 411. The conical tips 412 form conical shapes having bottom faces with sizes corresponding to the top faces of the triangular pyramidal bases 411. The apex angles of the conical tips 412 are smaller than the apex angles formed by the sides of the truncated triangular pyramids of the triangular pyramidal bases 411.

The triangular pyramidal bases 411 include triangular pyramidal side sections 413 which are the sides of the truncated triangular pyramids, and round chamfered side edges 415 which are the sides of the truncated triangular pyramids. The round chamfered side edges 415 are round chamfered with a prescribed curvature with respect to the sides of the truncated triangular pyramids. Also, the sections between the triangular pyramidal bases 411 of the adjacent closing protrusions 410a include round chamfered trough sections 414, which are recesses that have been round chamfered with a prescribed curvature.

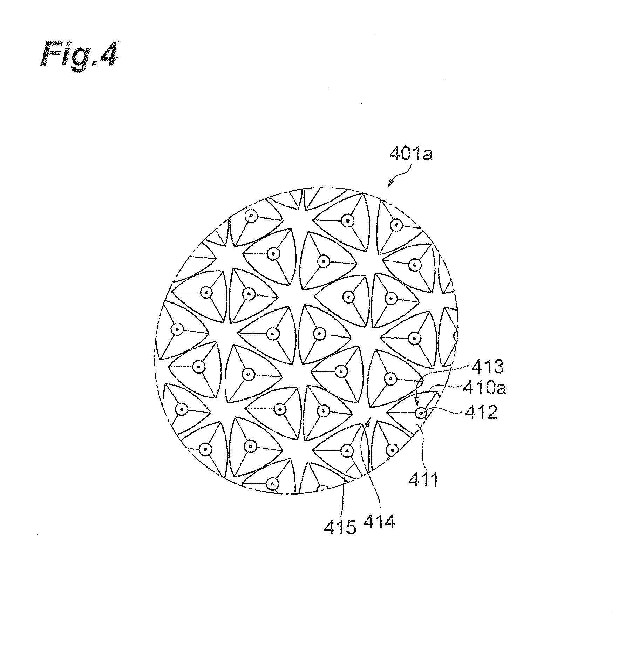

As shown in Fig. 4, each of the closing protrusions 410a are disposed in such a manner that the top sections of the conical tips 412 thereof are situated to correspond to six of the adjacent hexagonal cells 70h centered around one of the hexagonal cells 70h among the plurality of hexagonal cells 70h of the green honeycomb molded body 70. Also, each of the closing protrusions 410a is disposed so that the round chamfered side edges 415 of the triangular pyramidal base 411 are in contact with a partition 70W. The size of each triangular pyramidal base 411 is such that the length when the round chamfered side edge 415 is projected onto the closing face 401a from directly above the closing face 401 a is a shorter length than the length between the centers of the adjacent hexagonal cells 70h of the green honeycomb molded body 70.

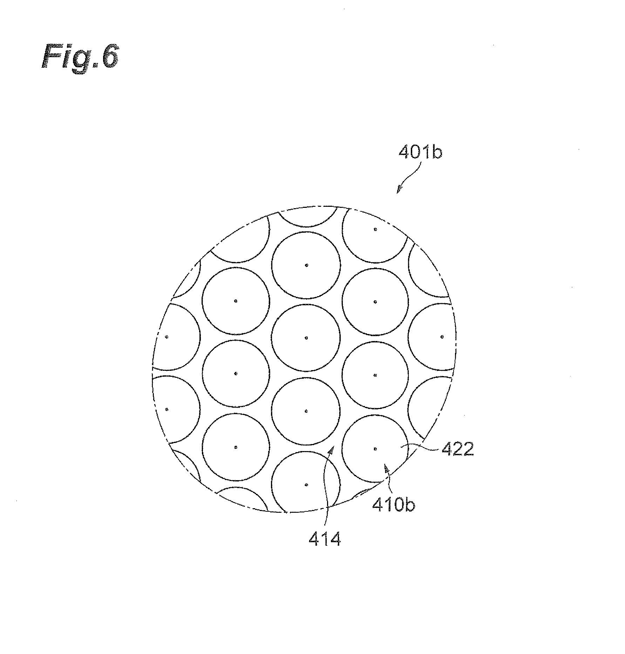

The closing jig 400 for closing of the bottom face 71b which is to be the exhaust gas discharge side (the outlet side) when the green honeycomb molded body 70 has been calcined as a diesel particulate filter, will now be explained. As shown in Fig. 6, conical closing protrusions 410b are provided on the closing face 401b that serves to close of the bottom face 71b. The closing protrusions 410b have circular conical side sections 422. Similar to the closing face 401a, the sections between the adjacent closing protrusions 410b include round chamfered trough sections 414, which are recesses that have been round chamfered with a prescribed curvature. The conical closing protrusions 410b may have truncated conical shapes with analogously smaller circular cones removed from the tips.

As shown in Fig. 6, each of the closing protrusions 410b are disposed in such a manner that the top sections are situated to correspond to one hexagonal cell 70h surrounded by six adjacent hexagonal cells 70h around it, among the plurality of hexagonal cells 70h of the green honeycomb molded body 70. Each of the one hexagonal cells 70h at the location corresponding to the closing protrusion 410b is one hexagonal cell 70h surrounded by six adjacent hexagonal cells 70h at locations corresponding to closing protrusions 410a on the top face 71a.

Therefore, on the top face 71a, there are inserted closing protrusions 410a for each of the six adjacent hexagonal cells 70h surrounding one hexagonal cell 70h as the center, while on the bottom face 71b, there are inserted closing protrusions 410b for one hexagonal cell 70h surrounded by the six adjacent hexagonal cells 70h in which the closing protrusions 410a have been inserted on the top face 71 a. The sizes of each of the closing protrusions 410b are such that the radius of the bottom face of each closing protrusion 410b is either the length between opposite sides of the hexagonal cells 70h of the green honeycomb molded body 70, or slightly shorter than that length.

### (Cutting step)

The cutting step for the green honeycomb molded body 70 of this embodiment will now be described. As shown in Fig. 7, the raw mixture prepared as described above is extruded from an extrusion molding machine 100 having an outlet opening corresponding to the cross-sectional shapes of the partitions 70W, to manufacture a green honeycomb molded body 70 according to this embodiment.

The extruded green honeycomb molded body 70 is supported by a pedestal 120 each time it is extruded to a prescribed length. Each pedestal 120 supporting the green honeycomb molded body 70 is transported in order on a roller conveyor 140, in the direction in which the green honeycomb molded body 70 is extruded. The transported green honeycomb molded body 70 is cut to a prescribed length with a cutting blade 240, so that a top face 71a and bottom face 71 b are formed perpendicular to the side faces 71c. Cutting of the green honeycomb molded body 70 may be accomplished with a wire instead of the cutting blade 240.

### (Closing step)

The closing step for the green honeycomb molded body 70 of this embodiment will now be described. The closing step for the top face 71a which is to be the exhaust gas supply side (the inlet side) when the green honeycomb molded body 70 has been calcined as a diesel particulate filter, will be explained first.

As shown in Fig. 8, the end on the top face 71a side of the green honeycomb molded body 70 is inserted into the support socket section 450 of the closing jig 400. The tips of the closing protrusions 410a of the closing face 401 a are inserted into some of the hexagonal cells 70h. As shown in Fig. 9, the conical tips 412 of the closing protrusions 401 a are inserted into each of the adjacent six hexagonal cells 70h surrounding one hexagonal cell 70h as the center.

When the closing protrusions 410a are further inserted into the hexagonal cells 70h, as shown in Fig. 10, the triangular pyramidal bases 411 of the closing protrusions 410a become inserted in the hexagonal cells 70h, as shown in Fig. 11. Each of the round chamfered side edges 415 of the triangular pyramidal bases 411 come into contact with a partition 70W. The partitions 70W are subjected to pressure by the closing protrusions 410a, being pressed in such a manner as to close the hexagonal cell 70h in which no closing protrusion 410a is inserted, at the center of the six hexagonal cells 70h into which the closing protrusions 410a have been inserted.

When the closing protrusions 410a are further inserted into the hexagonal cells 70h as shown in Fig. 12, the partitions 70W pressed from six directions by the round chamfered side edges 415 and triangular pyramidal side sections 413 of the triangular pyramidal bases 411 become contact bonded in an integral manner, as shown in Fig. 13. The ends of the contact bonded partitions 70W contact with the round chamfered trough sections 414 of the closing face 401 a, forming rounded partition-bonded ends 73 which are round chamfered according to the shapes of the round chamfered trough sections 414, thereby completing closing. This closes the one hexagonal cell 70h that is surrounded by six adjacent hexagonal cells 70h, at the top face 71a which is to be the exhaust gas supply side (inlet side).

Incidentally, when the triangular pyramidal side sections 413 of the triangular pyramidal bases 411 of the closing jig 400 are essentially planar without rounding, the thicknesses of the partitions at the closed sections can be essentially uniform, as shown in Fig. 14 instead of Fig. 13.

The closing step for the bottom face 71b which is to be the exhaust gas discharge side (the outlet side) when the green honeycomb molded body 70 has been calcined as a diesel particulate filter, will now be explained. As shown in Fig. 15, the end on the bottom face 71b side of the green honeycomb molded body 70 is inserted into the support socket section 450 of the closing jig 400. The tips of the closing protrusions 410b of the closing face 401b are inserted into some of the hexagonal cells 70h. As shown in Fig. 16, the closing protrusions 410b are each inserted into one hexagonal cell 70h surrounded by six adjacent hexagonal cells 70h. As mentioned above, the hexagonal cells 70h into which the closing protrusions 410b have been inserted on the bottom face 71b are the hexagonal cells 70h into which no closing protrusions 410a have been inserted on the top face 71a.

When the closing protrusions 410b are further inserted into the hexagonal cells 70h as shown in Fig. 17, the circular conical side sections 422 of the closing protrusions 410b come into contact with the partitions 70W, as shown in Fig. 18. The partitions 70W are subjected to pressure by the closing protrusions 410b, being pressed in such a manner as to close the hexagonal cell 70h in which no closing protrusion 410b is inserted, between the hexagonal cells 70h into which the closing protrusions 410b have been inserted.

When the closing protrusions 410b are further inserted into the hexagonal cells 70h as shown in Fig. 19, the partitions 70W that have been pressed by the circular conical side sections 422 of the closing protrusions 410b become integrally contact bonded, as shown in Fig. 20. The ends of the contact bonded partitions 70W contact with the round chamfered trough sections 414 of the closing face 401b, forming rounded partition-bonded ends 73 which are round chamfered according to the shapes of the round chamfered trough sections 414, thereby completing closing. This closes the six adjacent hexagonal cells 70h around the one hexagonal cell 70h that has been closed on the top face 71a, at the bottom face 71b which is to be the exhaust gas discharge side (outlet side). After closing has thus been completed on the top face 71a and the bottom face 71b, a drying step and firing step are carried out to manufacture a honeycomb structure having the same form as the green honeycomb molded body 70 described above.

According to this embodiment, the method for manufacturing a honeycomb structure, wherein a plurality of through-holes mutually divided by partitions are open at the end faces of a cylinder, a plurality of hexagonal cells 70h being mutually divided by partitions 70W that are open at the end faces of the cylinder, includes a closing step in which the green honeycomb molded body 70 that is to be the honeycomb structure upon firing is extrusion molded from a raw material and cut to a prescribed length, immediately after which a closing jig 400 is inserted into some of the plurality of hexagonal cells 70h of the green honeycomb molded body 70 to contact bond together the partitions 70W and close the hexagonal cells 70h.

It is thus possible to very easily accomplish closing of the hexagonal cells 70h during manufacture of a honeycomb molded body, without requiring the use of a mask for injection of the closing material and selection of closing locations, or a precise cutting step after the drying step, as has been done in the prior art. Furthermore, since there is no need for waste of the closing material or cutting dust from precise cutting, it is possible to reduce the amount of materials used.

In addition, when the honeycomb structure that is manufactured is applied in a diesel particulate filter, it is possible to reduce pressure loss since the gas flow passage inlet can be widened compared to conventional closing methods. In hexagonal cells 70h that have been closed by a conventional closing material 70P, as shown in Fig. 21(a), there is a major drawback of air resistance at the top face 71a which is to be the exhaust gas supply side (inlet side). On the other hand, a top face 71 a closed by the manufacture method of this embodiment, as seen in Fig. 21(b), has large gas flow passage inlets with the ends between closed the partitions 70W being narrowed at the tips, and therefore air resistance is significantly reduced.

Also, the hexagonal cells 70h of the green honeycomb molded body 70 immediately after extrusion molding from the raw material and cutting to the prescribed length are hexagonal. When used as a diesel particulate filter, therefore, numerous holes are opened in the gas flow passages having shorter lengths of the partitions 70W than quadrilateral-shaped holes, and therefore the properties are more excellent as a diesel particulate filter.

Furthermore, according to this embodiment, the closing protrusions 401a of the closing jig 400, having a plurality of closing protrusions 401a that include truncated triangular pyramidal shapes, are inserted into each of the six adjacent hexagonal cells 70h surrounding single hexagonal cells 70h, thereby contact bonding together the partitions 70W and closing the hexagonal cells 70h. Consequently, if the closing protrusions 401a are inserted into the hexagonal cells 70h so that, for example, each of the side edges 415 of the plurality of triangular pyramidal closing protrusions 401 a contact with the partitions 70W of the hexagonal cells 70h, it is possible to easily close the one center hexagonal cell 70h among the seven mutually adjacent hexagonal cells 70h. It is therefore possible to efficiently accomplish closing of the close on the side that is to be the inlet side when used as a diesel particulate filter.

Furthermore, according to this embodiment, the closing protrusions 401b of the closing jig 400, having a plurality of conical closing protrusions 401b, are inserted into each single hexagonal cell 70h that is surrounded by six adjacent hexagonal cells 70h, thereby contact bonding together the partitions 70h and closing the hexagonal cells 70h. Consequently, if the closing protrusions 401b are inserted into the hexagonal cells 70h so that, for example, the circular conical side sections 422 of the plurality of conical closing protrusions 401b contact with the partitions 70W of the hexagonal cells 70h, it is possible to easily close the surrounding six hexagonal cells 70h among the seven mutually adjacent hexagonal cells 70h. It is therefore possible to efficiently accomplish closing of the close on the side that is to be the outlet side when used as a diesel particulate filter.

Furthermore, according to this embodiment, the hexagonal cells 70h are closed by a closing jig 400 having round chamfered trough sections 414 between each of the closing protrusions 401 a, 401 b, thereby closing the hexagonal cells 70h so as to form rounded partition-bonded ends 73 in which the contact bonded partitions 70W are rounded at the end faces. Consequently, when used as a diesel particulate filter, the air resistance is reduced at the joining sections between the partitions 70W, allowing the pressure loss to be reduced. This can also result in resistance to chipping and the like at the bonded rounded partition-bonded ends 73.

### [Second embodiment]

A second embodiment of the invention will now be described. As shown in Fig. 22, according to this embodiment, the hexagonal cells 70h on the top face 71a and the bottom face 71 b of the green honeycomb molded body 70 having hexagonal cells 70h are simultaneously closed. The green honeycomb molded body 70 that has been subjected to the cutting step in the same manner as the first embodiment described above contacts with the closing jig 400 having a closing face 401a on the top face 71 a, similar to the first embodiment, and with the closing jig 400 having a closing face 401b on the bottom face 71b. The process then proceeds to a closing step similar to the first embodiment, as shown in Fig. 23 and Fig. 24. This accomplishes closing on both the top face 71a and the bottom face 71 b, in the same manner as the first embodiment. After closing has thus been completed on the top face 71a and the bottom face 71 b, a drying step and firing step are carried out to manufacture a honeycomb structure having the same form as the green honeycomb molded body 70 described above.

According to this embodiment, in the closing step, the hexagonal cells 70h on both the top face 71a and the bottom face 71b of the green honeycomb molded body 70 are closed simultaneously. Consequently, it is possible to accomplish closing of the hexagonal cells 70h more efficiently than by a method of separately closing the hexagonal cells 70h on the top face 71a and the bottom face 71b.

Incidentally, it is not necessary to close both the top face 71a and the bottom face 71b using the closing jig 400 as in this embodiment, as closing of the hexagonal cells 70h can be accomplished by contact bonding together the partitions 70W with the closing jig 400 on only either one of the top face 71a or the bottom face 71b.

### [Third embodiment]

### (Closing jig)

A third embodiment of the invention will now be described. As shown in Fig. 25 and Fig. 26, the closing jig 400' for the bottom face 71b of the green honeycomb molded body 70 of this embodiment can be selectively changed between the state in which the closing protrusions 410b are retracted on the inner side of the closing face 401b, and the state in which the closing protrusions 410b are projecting to the outer side of the closing face 401b. The closing protrusions 410b are disposed in the same manner as the first embodiment, being adjustable between retraction in the inner side of the closing face 401b and projection to the outer side of the closing face 401b, through holes having the same diameters as the bottom faces of the closing protrusions 410b. Retraction and projection of the closing protrusions 410b can be accomplished using an air pressure or oil pressure mechanism.

The closing face 401b having the closing protrusions 410b in a retracted state will have round chamfered trough sections 414 remaining in the same manner as the first embodiment and do not necessarily need to be completely flat. This construction is the same for the closing jig 400' for the top face 71a of the green honeycomb molded body 70 as well.

### (Cutting step)

The cutting step for the green honeycomb molded body 70 of this embodiment will now be described. As shown in Fig. 27, the bottom face 71b of the green honeycomb molded body 70, which has hexagonal cells 70h, immediately after being extrusion molded from the raw material in the vertical downward direction by the extrusion molding machine 100, is supported by the closing face 401b of the closing jig 400'. During this time, the closing jig 400' has the closing protrusions 410b retracted on the inner side of the closing face 401b. Next, as shown in Fig. 28, the green honeycomb molded body 70 is cut by a cutting blade 240 while the green honeycomb molded body 70 is supported by the closing jig 400'. Cutting of the green honeycomb molded body 70 may be accomplished with a wire instead of the cutting blade 240.

### (Closing step)

The closing step for the green honeycomb molded body 70 of this embodiment will now be described. As shown in Fig. 29 and Fig. 30, the top face 71 a cut in the cutting step is supported by the closing face 401a of the closing jig 400'. During this time, the closing jig 400' has the closing protrusions 410a retracted on the inner side of the closing face 401 a.

Next, having the closing protrusions 410a, 410b respectively protruding from the closing faces 401a, 401b of the closing jig 400' and inserting the closing protrusions 410a, 410b respectively into some of the hexagonal cells 70h, as shown in Fig. 31, accomplishes closing of the hexagonal cells 70h in the same manner as the first embodiment described above.

Incidentally, it is not necessary to close both the top face 71a and the bottom face 71b using the closing jig 400' as in this embodiment, as closing of the hexagonal cells 70h can be accomplished by contact bonding together the partitions 70W with the closing jig 400' only on either the top face 71a or the bottom face 71b. In this case, closing may be carried out on the top face 71a with the closing jig 400' having the closing face 401 a, allowing closing using a closing material similar to the prior art on the bottom face 70b, for the hexagonal cells 70h that were not closed on the top face 71 a, or closing may be carried out on the bottom face 71b with the closing jig 400' having the closing face 401b, allowing closing using a closing material similar to the prior art on the top face 71a, for the regular hexagon cells 70h that were not closed on the bottom face 71 b.

When the diameter of the green honeycomb molded body 70 is increased, there is increased bending due to gravity when the green honeycomb molded body 70 is extrusion molded from the raw material in the horizontal direction, and it can be difficult to support the green honeycomb molded body 70 at the side face 71c. According to this embodiment, however, the bottom face 71b of the green honeycomb molded body 70, immediately after being extrusion molded from the raw material in the vertical downward direction by the extrusion molding machine 100, is supported by the closing jig 400'. Thus, even with a large-diameter green honeycomb molded body 70, it is possible to support the green honeycomb molded body 70 without causing bending or distortion of the hexagonal cells 70h. Furthermore, in the subsequent closing step, the plurality of closing protrusions 410a, 410b of the closing jig 400' are inserted into each of some of the hexagonal cells 70h of the green honeycomb molded body 70 that has been supported, thereby contact bonding together the partitions 70W for closing of the hexagonal cells 70h. This allows support and closing of the green honeycomb molded body 70 to be accomplished in a continuous and efficient manner.

Furthermore, according to this embodiment, the closing jig 400' is selectively adjustable between the state in which the closing protrusions 410b are retracted on the inner side of the closing face 401b and the state in which the closing protrusions 410b are projecting to the outer side of the closing face 401b, and the bottom face 70b of the green honeycomb molded body 70 is supported immediately after extrusion molding from the raw material in the vertical downward direction by the extrusion molding machine 100, by the closing face 401b of the closing jig 400' wherein the closing protrusions 410b are retracted on the inner side of the closing face 401 b. Consequently, even with a large-diameter green honeycomb molded body 70, it is possible to more stably support the green honeycomb molded body 70 without causing bending or distortion of the hexagonal cells 70h. Furthermore, in the closing step, the closing protrusions 410b of the closing jig 400', which has the closing protrusions 410b projecting to the outer side of the closing face 401b, are inserted into each of some of the hexagonal cells 70h on the bottom face 71 b of the green honeycomb molded body 70 to contact bond together the partitions 70W for closing of the hexagonal cells 70h. Thus, it is possible to contact bond together the partitions 70W and close the hexagonal cells 70h while supporting the green honeycomb molded body 70.

### [Fourth embodiment]

### (Closing jig)

A fourth embodiment of the invention will now be described. This embodiment differs from the first embodiment in that triangular pyramidal closing protrusions are used as the closing jig on the inlet side, and truncated hexagonal pyramidal closing protrusions are used as the closing jig on the outlet side. As shown in Fig. 32 to Fig. 34, which are magnified plan views of a region corresponding to section A of Fig. 2, in a closing jig for the inlet side of a green honeycomb molded body having hexagonal cells according to the fourth embodiment, the closing protrusions 410d of this embodiment have triangular pyramidal shapes overall. The closing protrusions 410d include triangular pyramidal side sections 413 which are the sides of the triangular pyramids, and round chamfered side edges 415 which are the side faces of the triangular pyramids. The round chamfered side edges 415 are round chamfered with a prescribed curvature with respect to the sides of the triangular pyramids. Also, the sections between the adjacent closing protrusions 410d include round chamfered trough sections 414, which are recesses that have been round chamfered with a prescribed curvature.

As shown in Fig. 33, each of the closing protrusions 410d are disposed in such a manner that the top sections thereof are situated to correspond to six of the adjacent hexagonal cells 70h centered around one of the hexagonal cells 70h among the plurality of hexagonal cells 70h of the green honeycomb molded body 70. Also, each of the closing protrusions 410d is disposed so that the round chamfered side edges 415 thereof are in contact with a partition 70W.

The size of each closing protrusion 410d is such that the length when the round chamfered side edge 415 is projected onto the closing face 401 a from directly above the closing face 401 a is a shorter length than the length between the centers of the adjacent hexagonal cells 70h of the green honeycomb molded body 70. The closing protrusions 410d of this embodiment can be applied both to the first embodiment and the second embodiment described above.

The closing jig 400 for closing of the bottom face 71b which is to be the exhaust gas discharge side (the outlet side) when the green honeycomb molded body 70 has been calcined as a diesel particulate filter, will now be explained for this embodiment. As shown in Fig. 35, truncated hexagonal pyramidal closing protrusions 410e are provided on the closing face 401 b that serves for closing of the bottom face 71b. The closing protrusions 410e have truncated hexagonal pyramidal tips 432 wherein the tips include hexagonal flat sections. The closing protrusions 410e have six truncated hexagonal pyramidal side sections 433, and six truncated hexagonal pyramidal side edges 435 between each of the truncated hexagonal pyramidal side faces 433. The truncated hexagonal pyramidal closing protrusions 410e may also be hexagonal pyramidal shapes without truncated hexagonal pyramidal tips 432.

As shown in Fig. 36, each of the closing protrusions 410e are disposed in such a manner that the top sections are situated to correspond to one hexagonal cell 70h surrounded by six adjacent hexagonal cells 70h around it, among the plurality of hexagonal cells 70h of the green honeycomb molded body 70. Each of the truncated hexagonal pyramidal side faces 433 of the closing protrusions 410e are disposed facing the partitions 70W of the hexagonal cells 70h. Each of the one hexagonal cells 70h at the location corresponding to the closing protrusion 410e is one hexagonal cell 70h surrounded by six adjacent hexagonal cells 70h at locations corresponding to closing protrusions 410d on the top face 71a.

Therefore, similar to the first embodiment and second embodiment described above, on the top face 71 a, there are inserted closing protrusions 410d for each of the six adjacent hexagonal cells 70h surrounding one hexagonal cell 70h as the center, while on the bottom face 71b, there are inserted closing protrusions 410e for one hexagonal cell 70h surrounded by the six adjacent hexagonal cells 70h in which the closing protrusions 410d have been inserted on the top face 71a.

For this embodiment, each of the closing protrusions 410e are disposed so that the truncated hexagonal pyramidal side edges 435 are in contact with each other at their bottom sections. Thus, middle regular triangular flat regions 437, which are regular triangular flat planar regions, are formed in the middle between each of the 3 mutually adjacent closing protrusions 410e. As shown in Fig. 35 and Fig. 36, middle recesses 434, as hemispherical recesses, are formed in each of the middle regular triangular flat regions 437 between the 3 mutually adjacent closing protrusions 410e.

The sizes of each of the closing protrusions 410e are such that the truncated hexagonal pyramidal tips 432 are smaller than the hexagonal cells 70h of the green honeycomb molded body 70. The mutual lengths between the truncated hexagonal pyramidal side edges 435 facing each of the bottom sections of the closing protrusions 410e are the same as the distances between the centers of the hexagonal cells 70h into which each of the two adjacent closing protrusions 410e are to be inserted. Each of the closing protrusions 410e for this embodiment are formed from a metal such as tool steel, or a synthetic resin. Because each of the closing protrusions 410e for this embodiment are disposed across a gap on the closing face 401b, they may be manufactured by wire cutting or the like.

### (Closing step)

The closing step for the green honeycomb molded body 70 of this embodiment will now be described. The closing step for the top face 71a which is to be the exhaust gas supply side (the inlet side) when the green honeycomb molded body 70 has been calcined as a diesel particulate filter, is the same as for the first embodiment and second embodiment and will not be explained again here.

The closing step for the bottom face 71b which is to be the exhaust gas discharge side (the outlet side) when the green honeycomb molded body 70 has been calcined as a diesel particulate filter, will now be explained. As shown in Fig. 15, the end on the bottom face 71b side of the green honeycomb molded body 70 is inserted into the support socket section 450 of the closing jig 400. The tips of the closing protrusions 410e of the closing face 401b are inserted into some of the hexagonal cells 70h. As shown in Fig. 37, the closing protrusions 410e are each inserted into one hexagonal cell 70h surrounded by six adjacent hexagonal cells 70h. During this time, each of the truncated hexagonal pyramidal side faces 433 of the closing protrusions 410e are facing the partitions 70W of the hexagonal cells 70h. As mentioned above, the hexagonal cells 70h into which the closing protrusions 410e have been inserted on the bottom face 71b are the hexagonal cells 70h into which no closing protrusions 410d have been inserted on the top face 71a.

When the closing protrusions 410e are further inserted into the hexagonal cells 70h as shown in Fig. 17, the truncated hexagonal pyramidal side faces 433 of the closing protrusions 410e come into contact with the partitions 70W, as shown in Fig. 38. The partitions 70W are subjected to pressure by the closing protrusions 410e, being pressed in such a manner as to close the hexagonal cell 70h in which no closing protrusion 410e is inserted, between the hexagonal cells 70h into which the closing protrusions 410e have been inserted. During this time, the partitions 70W of the hexagonal cells 70h to be closed are pushed into the middle regular triangular flat regions 437 between the 3 mutually adjacent closing protrusions 410e.

When the closing protrusions 410e are further inserted into the hexagonal cells 70h as shown in Fig. 19, the partitions 70W that have been pressed by the truncated hexagonal pyramidal side faces 433 of the closing protrusions 410e become integrally contact bonded together at the middle regular triangular flat regions 437 between the 3 mutually adjacent closing protrusions 410e, being molded into triangular columnar shapes, as shown in Fig. 39. The ends of the contact bonded partitions 70W are pushed into the middle recesses 434 of the middle regular triangular flat regions 437 between the 3 mutually adjacent closing protrusions 410e, forming spherical partition-bonding ends 74 with round chamfering corresponding to the shapes of the middle recesses 434, thereby completing closing. This closes the six adjacent hexagonal cells 70h around the one hexagonal cell 70h that has been closed on the top face 71 a, at the bottom face 71b which is to be the exhaust gas discharge side (outlet side). The closing protrusions 410e of this embodiment can be similarly applied to both the first embodiment and the second embodiment described above. After closing has thus been completed on the top face 71a and the bottom face 71b, a drying step and firing step are carried out to manufacture a honeycomb structure having the same form as the green honeycomb molded body 70 described above.

According to this embodiment, the closing protrusions of the closing jig 400, having truncated hexagonal pyramidal-shaped closing protrusions 410e, are inserted into each single hexagonal cell 70h that is surrounded by six adjacent hexagonal cells 70h, thereby contact bonding together the partitions 70W and closing the hexagonal cells 70h. Consequently, if the plurality of truncated hexagonal pyramidal closing protrusions 410e are inserted into the same hexagonally-shaped hexagonal cells 70h, it is possible to easily accomplish smoother closing of the six surrounding hexagonal cells 70h among the seven mutually adjacent hexagonal cells 70h. It is therefore possible to efficiently accomplish closing of the close on the side that is to be the outlet side when used as a diesel particulate filter.

Furthermore, according to this embodiment, the ends of the contact bonded partitions 70W are pushed into the middle regular triangular flat regions 437 between the 3 mutually adjacent closing protrusions 410e, and are molded into triangular columnar shapes, thereby allowing the strength of the ends of the contact bonded partitions 70W to be further increased. Also according to this embodiment, the ends of the contact bonded partitions 70W are pushed into the middle recesses 434 of the middle regular triangular flat regions 437 between the 3 mutually adjacent closing protrusions 410e, forming spherical partition-bonding ends 74, thereby allowing closing to be accomplished even more smoothly. Also according to this embodiment, the closing protrusions 410e are disposed across relative mutual distances, thereby facilitating manufacture by wire cutting and the like. Furthermore, the hexagonal holes that are open on the end face of the honeycomb structure after closing are also mutually situated at relative distances at the side sections, while the closed sections are thickened so that the strength can be increased.

### [Fifth embodiment]

### (Closing jig)

A fifth embodiment of the invention will now be described. This embodiment differs from the fourth embodiment in that the closing jig used for the outlet side has truncated hexagonal pyramidal closing protrusions situated in a compact manner. For the closing jig for the inlet side may there may be used triangular pyramidal closing protrusions as used for the first embodiment or fourth embodiment, and it will not be explained again here.

The closing jig 400 for closing of the bottom face 71b which is to be the exhaust gas discharge side (the outlet side) when the green honeycomb molded body 70 has been calcined as a diesel particulate filter, will now be explained for this embodiment. As shown in Fig. 40, truncated hexagonal pyramidal closing protrusions 410f are provided on the closing face 401b that serves for closing of the bottom face 71b. The individual closing protrusions 410f for this embodiment have truncated hexagonal pyramidal tips 432, truncated hexagonal pyramidal side faces 433 and truncated hexagonal pyramidal side edges 435, similar to the closing protrusions 410e of the fourth embodiment. The truncated hexagonal pyramidal closing protrusions 410e may also be hexagonal pyramidal shapes without truncated hexagonal pyramidal tips 432.

As shown in Fig. 41, in a manner similar to the fourth embodiment, each of the closing protrusions 410f are disposed in such a manner that the top sections are situated to correspond to one hexagonal cell 70h surrounded by six adjacent hexagonal cells 70h around it, among the plurality of hexagonal cells 70h of the green honeycomb molded body 70. Unlike the fourth embodiment, however, each of the truncated hexagonal pyramidal side edges 435 of the closing protrusions 410f are disposed so as to be respectively facing the partitions 70W of the hexagonal cells 70h. Similar to the fourth embodiment, each of the one hexagonal cells 70h at a location corresponding to the closing protrusion 410f is one hexagonal cell 70h surrounded by six adjacent hexagonal cells 70h at locations corresponding to closing protrusions 410a, 410d on the top face 71a.

Therefore, similar to the first embodiment, second embodiment and fourth embodiment described above, on the top face 71 a, there are inserted closing protrusions 410a, 410d for each of the six adjacent hexagonal cells 70h surrounding one hexagonal cell 70h as the center, while on the bottom face 71b, there are inserted closing protrusions 410f for one hexagonal cell 70h surrounded by the six adjacent hexagonal cells 70h in which the closing protrusions 410a, 410d have been inserted on the top face 71a. For this embodiment, each of the closing protrusions 410f are disposed so that the truncated hexagonal pyramidal side faces 433 are in contact with each other at their bottom sections. According to this embodiment, therefore, flat regions are formed between the closing protrusions 410f, unlike in the fourth embodiment.

The sizes of each of the closing protrusions 410f are such that the truncated hexagonal pyramidal tips 432 are smaller than the hexagonal cells 70h of the green honeycomb molded body 70. The mutual lengths between the truncated hexagonal pyramidal side faces 433 facing each of the bottom sections of the closing protrusions 410f are the same as the distances between the centers of the hexagonal cells 70h into which each of the two adjacent closing protrusions 410f are to be inserted. Each of the closing protrusions 410f for this embodiment are formed from a metal such as tool steel, or a synthetic resin. Each of the closing protrusions 410f for this embodiment can be manufactured by electrical discharge machining or the like.

### (Closing step)

The closing step for the green honeycomb molded body 70 of this embodiment will now be described. The closing step for the top face 71a which is to be the exhaust gas supply side (the inlet side) when the green honeycomb molded body 70 has been calcined as a diesel particulate filter, is the same as for the first embodiment and second embodiment and will not be explained again here.

The closing step for the bottom face 71b which is to be the exhaust gas discharge side (the outlet side) when the green honeycomb molded body 70 has been calcined as a diesel particulate filter, will now be explained. As shown in Fig. 15, the end on the bottom face 71b side of the green honeycomb molded body 70 is inserted into the support socket section 450 of the closing jig 400. The tips of the closing protrusions 410f of the closing face 401b are inserted into some of the hexagonal cells 70h. As shown in Fig. 42, the closing protrusions 410f are each inserted into one hexagonal cell 70h surrounded by six adjacent hexagonal cells 70h. During this time, each of the truncated hexagonal pyramidal side edges 435 of the closing protrusions 410f are facing the partitions 70W of the hexagonal cells 70h. As mentioned above, the hexagonal cells 70h into which the closing protrusions 410f have been inserted on the bottom face 71b are the hexagonal cells 70h into which no closing protrusions 410a, 410d have been inserted on the top face 71a.

When the closing protrusions 410f are further inserted into the hexagonal cells 70h as shown in Fig. 17, the truncated hexagonal pyramidal side edges 435 of the closing protrusions 410f come into contact with the partitions 70W, as shown in Fig. 43. The partitions 70W are subjected to pressure by the closing protrusions 410f, being pressed in such a manner as to close the hexagonal cell 70h in which no closing protrusion 410f is inserted, between the hexagonal cells 70h into which the closing protrusions 410f have been inserted. During this time, the partitions 70W of the hexagonal cells 70h to be closed are pushed between the 3 mutually adjacent closing protrusions 410f.

When the closing protrusions 410f are further inserted into the hexagonal cells 70h as shown in Fig. 19, the partitions 70W that have been pressed by the truncated hexagonal pyramidal side edges 435 of the closing protrusions 410f become integrally contact bonded together between the 3 mutually adjacent closing protrusions 410f, as shown in Fig. 44, thereby completing closing. This closes the six adjacent hexagonal cells 70h around the one hexagonal cell 70h that has been closed on the top face 71 a, at the bottom face 71b which is to be the exhaust gas discharge side (outlet side). The closing protrusions 410f of this embodiment can be similarly applied to both the first embodiment and the second embodiment described above. After closing has thus been completed on the top face 71a and the bottom face 71b, a drying step and firing step are carried out to manufacture a honeycomb structure having the same form as the green honeycomb molded body 70 described above.

According to this embodiment, closing is accomplished using truncated hexagonal pyramidal closing protrusions 410f, for closing of the bottom face 71b which is to be the exhaust gas discharge side (outlet side). Also, since the hexagonal cells 70h that have not been closed on the bottom face 71b side of the green honeycomb molded body 70 widen into hexagonal shapes analogous to before the closing step, as shown in Fig. 44, closing can be accomplished more smoothly than when they widen in a circular manner as in the first embodiment.

Furthermore, according to this embodiment, as the closing protrusions 410f are disposed in a mutually compacted manner, the tips of the contact bonded partitions 70W may be thin and small. Consequently, since the area of the closed sections is narrowed, it is possible to further reduce pressure loss on the outlet side.

### [Sixth embodiment]

### (Green honeycomb molded body (hexagonal cells with different open areas on the inlet side and outlet side))

A sixth embodiment of the invention will now be described. First, a green honeycomb molded body that is to be worked according to a sixth embodiment of the invention will be described. As shown in Fig. 45(a) and (b), the green honeycomb molded body 70 of this embodiment has, for example, a top face 71a, a bottom face 71b and a side face 71c, and circular columns in which inlet side hexagonal cells 70Hin and outlet side hexagonal cells 70Hout, which are a plurality of hexagonal through-holes on the top face 71a and the bottom face 71b, are aligned essentially parallel. The inlet side hexagonal cells 70Hin and outlet side hexagonal cells 70Hout are separated by partitions 70W.

As shown in Fig. 45(b), the top face 71a includes one outlet side hexagonal cell 70Hout and six inlet side hexagonal cells 70Hin adjacent to the one outlet side hexagonal cell 70Hout through partitions 70W and having smaller open areas than the outlet side hexagonal cell 70Hout. The configuration of the inlet side and the outlet side may be reversed. As shown in Fig. 46, on the top face 71 a which is to be the inlet side, the green honeycomb molded body 70 shown for the first embodiment has the three outlet side hexagonal cells 70hout that are open on the outlet side in contact with the one inlet side hexagonal cell 70hin that is open on the inlet side, via the partitions 70W. On the other hand, according to this embodiment, two outlet side hexagonal cells 70Hout are in contact with one inlet side hexagonal cell 70Hin via the partitions 70W. In the inlet side hexagonal cell 70Hin, the lengths of the partitions 70W adjacent to the outlet side hexagonal cells 70Hout are longer than the lengths of the partitions 70W adjacent to the other inlet side hexagonal cells 70Hin. Also in the inlet side hexagonal cell 70Hin, the diameter in the direction interposed between the two outlet side hexagonal cells 70Hout is shorter than the diameter in the direction interposed between the other two inlet side hexagonal cells 70Hin.

The green honeycomb molded body 70 is an uncalcined molded body that is to become a porous ceramic by subsequent firing, and the construction and manufacturing method other than for the inlet side hexagonal cells 70Hin and outlet side hexagonal cells 70Hout are the same as for a green honeycomb molded body 70 having hexagonal cells 70h.

### (Closing jig)

As shown in Fig. 47 and Fig. 48, which are magnified views of a region corresponding to section A of Fig. 2, in a closing jig for the inlet side according to the sixth embodiment, the closing protrusions 410i of this embodiment have square pyramidal shapes overall. As seen by the flat view in Fig. 48, the bottom faces of the closing protrusions 410i are rhomboid. The closing protrusions 410i include square pyramidal side sections 417 which are the sides of the triangular squares, and round chamfered side edges 415 which are the side faces of the square pyramids. Because the bottom faces of the closing protrusions 410i are rhomboid, the closing protrusions 410i include long pairs of round chamfered side edges 415, and shorter pairs of round chamfered side edges 415. The round chamfered side edges 415 are round chamfered with a prescribed curvature with respect to the sides of the square pyramids. Also, the sections between the adjacent closing protrusions 410i include round chamfered trough sections 414, which are recesses that have been round chamfered with a prescribed curvature. Incidentally, the closing protrusions 410i may have square pyramid trapezoidal shapes with the top parts cut off.

As shown in Fig. 48, each of the closing protrusions 410i are disposed in such a manner that the top sections are situated to correspond to the inlet side hexagonal cells 70Hin of the green honeycomb molded body 70. Also, each of the closing protrusions 410i is disposed so that each of the long round chamfered side edges 415 is in contact with a partition 70W of the outlet side hexagonal cell 70Hout. The size of each closing protrusion 410i is such that the length when a long round chamfered side edge 415 is projected onto the closing face 401a from directly above the closing face 401a is a shorter length than the length from the center of an inlet side hexagonal cell 70Hin to the center of an outlet side hexagonal cell 70Hout adjacent to that inlet side hexagonal cell 70Hin.

### (Closing step)

The closing step for the green honeycomb molded body 70 of this embodiment will now be described. The closing step for the top face 71 a which is to be the exhaust gas supply side (the inlet side) when the green honeycomb molded body 70 has been calcined as a diesel particulate filter, will be explained first.

As shown in Fig. 8, the end on the top face 71a side of the green honeycomb molded body 70 are inserted into the support socket section 450 of the closing jig 400. As shown in Fig. 49, the tips of the closing protrusions 410i on the closing face 401 a are inserted into each of the inlet side hexagonal cells 70Hin with the long round chamfered side edges 415 contacting with the partitions 70W of the outlet side hexagonal cell 70Hout.

As shown in Fig. 10, when the closing protrusions 410i are further inserted into the inlet side hexagonal cells 70Hin, each of the long round chamfered side edges 415 come into contact with the partitions 70W of the outlet side hexagonal cells 70Hout, as shown in Fig. 50. The partitions 70W are pressed in such a manner as to close the outlet side hexagonal cells 70Hout in which no closing protrusions 410i have been inserted, at the center of the six inlet side hexagonal cells 70Hin into which the closing protrusions 410i have been inserted.

When the closing protrusions 410i are further inserted into the inlet side hexagonal cells 70Hin as shown in Fig. 12, the partitions 70W pressed from six directions by the square round chamfered side edges 415 and square pyramidal side sections 417 become contact bonded in an integral manner, as shown in Fig. 51. The ends of the contact bonded partitions 70W contact with the round chamfered trough sections 414 of the closing face 401 a, the closing thus being completed with round chamfering according to the shapes of the round chamfered trough sections 414. This closes the one outlet side hexagonal cell 70Hout that is surrounded by six adjacent inlet side hexagonal cells 70Hin, at the top face 71a which is to be the exhaust gas supply side (inlet side).

The closing step for the bottom face 71b which is to be the exhaust gas supply side (the outlet side) when the green honeycomb molded body 70 has been calcined as a diesel particulate filter, will now be explained. In the closing step for the outlet side, there may be used the closing jig 400 having closing protrusions 410f that was used for the fifth embodiment described above. Incidentally, for this embodiment, the distance between centers of the adjacent closing protrusions 410f on the closing face 401b corresponds to the distance between centers of the adjacent outlet side hexagonal cells 70Hout.

As shown in Fig. 15, the end on the bottom face 71b side of the green honeycomb molded body 70 is inserted into the support socket section 450 of the closing jig 400. As shown in Fig. 52, the tips of the closing protrusions 410f on the closing face 401b are inserted into each of the outlet side hexagonal cells 70Hout. As shown in Fig. 52, each of the truncated hexagonal pyramidal side faces 433 of the closing protrusions 410f are inserted facing the partitions 70W of the outlet side hexagonal cells 70Hout.

When the closing protrusions 410f are further inserted into the outlet side hexagonal cells 70Hout as shown in Fig. 17, the truncated hexagonal pyramidal side faces 433 of the closing protrusions 410f come into contact with the partitions 70W, as shown in Fig. 53. The partitions 70W are pressed in such a manner as to close the inlet side hexagonal cells 70Hin in which no closing protrusions 410f have been inserted, between the outlet side hexagonal cells 70Hout into which the closing protrusions 410f have been inserted. During this time, the partitions 70W of the inlet side hexagonal cells 70Hin to be closed are pushed between the 3 mutually adjacent closing protrusions 410f.

When the closing protrusions 410f are further inserted into the outlet side hexagonal cells 70Hout as shown in Fig. 19, the partitions 70W that have been pressed by the truncated hexagonal pyramidal side faces 433 of the closing protrusions 410f become integrally contact bonded together between the 3 mutually adjacent closing protrusions 410f, as shown in Fig. 54, thereby completing closing. This closes the six adjacent inlet side hexagonal cells 70Hin around the one outlet side hexagonal cell 70Hout that has been closed on the top face 71a, at the bottom face 71b which is to be the exhaust gas discharge side (outlet side).

On the other hand, in the closing step for the outlet side, there may be used the closing jig 400 having closing protrusions 410e that was used for the fourth embodiment described above. Incidentally, for this embodiment, the distance between centers of the adjacent closing protrusions 410e on the closing face 401b corresponds to the distance between centers of the adjacent outlet side hexagonal cells 70Hout.

As shown in Fig. 15, the end on the bottom face 71b side of the green honeycomb molded body 70 is inserted into the support socket section 450 of the closing jig 400. As shown in Fig. 55, the tips of the closing protrusions 410e on the closing face 401b are inserted into each of the outlet side hexagonal cells 70Hout. As shown in Fig. 55, each of the truncated hexagonal pyramidal side edges 435 of the closing protrusions 410f are inserted facing the partitions 70W of the outlet side hexagonal cells 70Hout.

When the closing protrusions 410e are further inserted into the outlet side hexagonal cells 70Hout as shown in Fig. 17, the truncated hexagonal pyramidal side edges 435 of the closing protrusions 410e come into contact with the partitions 70W, as shown in Fig. 56. The partitions 70W are pressed in such a manner as to close the inlet side hexagonal cells 70Hin in which no closing protrusions 410e have been inserted, between the outlet side hexagonal cells 70Hout into which the closing protrusions 410e have been inserted. During this time, the partitions 70W of the inlet side hexagonal cells 70Hin to be closed are pushed into the middle regular triangular flat regions 437 between the 3 mutually adjacent closing protrusions 410e.

When the closing protrusions 410e are further inserted into the outlet side hexagonal cells 70Hout as shown in Fig. 19, the partitions 70W that have been pressed by the truncated hexagonal pyramidal side edges 435 of the closing protrusions 410e become integrally contact bonded together at the middle regular triangular flat regions 437 between the 3 mutually adjacent closing protrusions 410e, being molded into triangular columnar shapes, as shown in Fig. 57. The ends of the contact bonded partitions 70W are pushed into the middle recesses 434 of the middle regular triangular flat regions 437 between the 3 mutually adjacent closing protrusions 410e, forming spherical partition-bonding ends 74 with round chamfering corresponding to the shapes of the middle recesses 434, thereby completing closing. This closes the six adjacent inlet side hexagonal cells 70Hin around the one outlet side hexagonal cell 70Hout that has been closed on the top face 71a, at the bottom face 71b which is to be the exhaust gas discharge side (outlet side). After closing has thus been completed on the top face 71 a and the bottom face 71b, a drying step and firing step are carried out to manufacture a honeycomb structure having the same form as the green honeycomb molded body 70 described above.

According to this embodiment, the group consisting of one outlet side hexagonal cell 70Hout, and six inlet side hexagonal cells 70Hin that are adjacent and surrounding the outlet side hexagonal cell 70Hout via the partitions 70W and that have smaller open areas than the outlet side hexagonal cell 70Hout, are all adjacent to each other. Thus, when the green honeycomb structure 70 has been implemented in a diesel particulate filter, for example, at the inlet side of the diesel particulate filter, the outlet side hexagonal cell 70Hout which has a large open area is closed and the inlet side hexagonal cells 70Hin with small open area are opened, while at the outlet side, the inlet side hexagonal cells 70Hin with small open area are closed and the outlet side hexagonal cell 70Hout with large open area is opened, such that the filtration area can be increased above one in which through-holes with equal open area are adjacent to each other. When implemented in a diesel particulate filter, therefore, it is possible to achieve lower pressure loss with smoke accumulation and higher smoke capture efficiency.

Furthermore, in the closing step, the closing protrusions 410i of the closing jig 400, which has a plurality of closing protrusions 410i that include square pyramidal shapes and/or truncated square pyramidal shapes with rhomboid bottom faces, are inserted in the inlet side hexagonal cells 70Hin with the long round chamfered side edges 415 contacting the partitions 70W of the outlet side hexagonal cell 70Hout, thereby causing contact bonding between the partitions 70W and allowing closing of the outlet side hexagonal cell 70Hout. This allows easy closing of the outlet side hexagonal cell 70Hout surrounded by the inlet side hexagonal cells 70Hin. Thus, when it is used as a diesel particulate filter it is possible to obtain more excellent properties than when it is implemented on the inlet side.

### [Seventh embodiment]

A seventh embodiment of the invention will now be described. As shown in Fig. 58, this differs from the first to sixth embodiments in that at the joining sections between the partitions 70W there are formed partition-elongated joining sections 75 where the partitions 70W are bonded together in a mutually parallel manner across a prescribed length. The lengths of partition-elongated joining sections 75 in the lengthwise direction of the green honeycomb molded body 70 may be equal to or greater than the thicknesses of the partitions 70W, and they may even be two times the thicknesses of the partitions 70W or greater. This embodiment has elongated joining section-forming grooves 418 corresponding to the partition-elongated joining sections 75 between the closing protrusions 410g configured on the closing face 401b. The elongated joining section-forming grooves 418 have mutually parallel wall faces with depths corresponding to the lengths of the partition-elongated joining sections 75. When, for example, the bottom face 71b of a green honeycomb molded body 70 having hexagonal cells 70h is closed with a closing jig having such closing protrusions 410g, the shapes of the hexagonal cells 70h after closing are as shown in Fig. 59. The closing jig having closing protrusions 410g according to this embodiment may be applied for closing of both the inlet side and outlet side in the first to sixth embodiments. After closing has thus been completed on the top face 71a and the bottom face 71b, a drying step and firing step are carried out to manufacture a honeycomb structure having the same form as the green honeycomb molded body 70 described above.

According to this embodiment, at the joining sections between the partitions 70W there are formed partition-elongated joining sections 75 where the partitions 70W are bonded together in a mutually parallel manner across a prescribed length. Consequently, the partitions 70W become bonded together across a larger area, thereby allowing the strength of the closed sections to be increased. In addition, at the ends of the hexagonal cells 70 that have not been closed, the partition-elongated joining sections 75 are elongated along the prescribed lengths, and hence there is less disturbance of the flow of exhaust gas at the inlet side where exhaust gas is supplied and at the outlet side where exhaust gas is discharged, thus allowing the pressure loss to be reduced.

### [Eighth embodiment]

### (Closing jig)

An eighth embodiment of the invention will now be described. As shown in Fig. 60, this differs from the seventh embodiment in that at the ends of the partition elongated joining sections 75 there are formed rounded partition-elongated joining ends 76 in the same manner as the rounded partition-bonded ends 73 of the first embodiment. This embodiment has partition-elongated joining sections 75 between the closing protrusions 410h configured on the closing face 401b. At the bottom sections of the partition-elongated joining sections 75 there are formed round chamfered trough sections 414, similar to the first embodiment. When, for example, the bottom face 71b of a green honeycomb molded body 70 having hexagonal cells 70h is closed with a closing jig having such closing protrusions 410h, the shapes of the hexagonal cells 70h after closing are as shown in Fig. 61. The closing jig having closing protrusions 410h according to this embodiment may be applied for closing of both the inlet side and outlet side in the first to sixth embodiments. After closing has thus been completed on the top face 71a and the bottom face 71b, a drying step and firing step are carried out to manufacture a honeycomb structure having the same form as the green honeycomb molded body 70 described above.

According to this embodiment, in addition to the effect of increasing the strength of the closed sections as in the seventh embodiment described above, formation of the rounded partition-elongated joining ends 76 reliably contact bonds together the ends of the partitions 70W and prevents close leakage, and when the honeycomb structure is used in a diesel particulate filter, there is less disturbance of the flow of exhaust gas at the end faces on the exhaust gas supply side and the exhaust gas discharge side, thereby allowing pressure loss to be reduced.

In the closing steps of the first to eighth embodiments, in order to increase deformation and weldability of the partitions, the closing jig may be inserted into the prescribed openings an additional time or multiple additional times as necessary, or the closing jig may be inserted again after squashing the closed ends flat, in order to arrange the shapes of the closed sections.

Also, a separate closing paste may be prepared and added into the cells before insertion of the closing jig, or the paste may be additionally coated onto the closing locations after drying or after firing of the green honeycomb molded body, and the drying and firing steps then repeated.

The shapes of some of the closing protrusions in a closing jig to be used in the first to eighth embodiments may differ. The differences in the shapes of the closing protrusions may be differences in the cross-sectional shapes of the protrusions, differences in the lengths from the trough sections between adjacent protrusions to the protrusion tips, or differences in the gaps between the closing protrusions, and combinations of two or more of these differences may also be employed.

Protrusions with different shapes may be configured so as to be distributed through a single closing jig, or concentrated at specific locations. In addition, a plurality of closing jigs comprising protrusions with different shapes may be integrated for use as a single closing jig.

Two or more types of protrusions with different shapes may also be disposed from the center of the closing jig. In the case of two types of protrusions with different shapes, the different protrusions may be disposed on the inside and outside of a circle drawn around the center of the closing jig, with a radius of 1/4 to 3/4 of the distance from the center of the jig to the outermost periphery, or the different protrusions may be disposed on the inside and outside of a circle drawn around the center of the jig, with a radius of 1/3 to 2/3 of the distance.

Also, in each of the protrusions, the lengths from the trough sections formed between the adjacent protrusions to the protrusion tips may be longer for the protrusions disposed on the outer periphery than for the protrusions disposed at the center section.

The flow of exhaust gas generally tends to be concentrated at the center section of the end face of a honeycomb molded body, and local soot accumulation and the increased pressure loss that accompanies it tend to notably lower the soot capture efficiency.

A honeycomb molded body that has been closed with a closing jig having the shapes and configuration of protrusions described above has greater deformation at the partitions of the openings on the outer periphery, and exhaust gas flows more easily at the outer peripheral sections than at the center section.

This may be expected to result in a uniform flow of exhaust gas in the honeycomb molded body, reduced pressure loss and improved capture efficiency of soot, and may be expected to also improve the regeneration efficiency during honeycomb regeneration, by the uniformity of soot combustion and temperature distribution.

A green honeycomb molded body that has completed the closing step of the first to eighth embodiments is subjected to a drying step to remove the moisture in the molded body, and then a firing step to manufacture a honeycomb molded body.

Drying of the green honeycomb molded body can generally be accomplished by hot air drying, microwave drying, reduced-pressure or vacuum drying, or the like. For drying of the green honeycomb molded body there may be applied reduced-pressure or vacuum drying, which allows efficient discharge of generated water vapor.

Moreover, from the viewpoint of preserving the shapes of the openings and close sections on both ends of the green honeycomb molded body, the molded body may be set horizontally in the dryer.

The present invention is not limited to the embodiments described above, and various modified modes are possible.

### Industrial Applicability

By the method for manufacturing a honeycomb structure according to one aspect of the invention, it is possible to reduce the number of steps employed.

### Reference Signs List

70 Green honeycomb molded body
71a Top face
71b Bottom face
71c Side face
70h Hexagonal cell
70Hin Inlet side hexagonal cell
70Hout Outlet side hexagonal cell
70hin Inlet side hexagonal cell
70hout Outlet side hexagonal cell
70W Partition
70P Closing material
73 Rounded partition-bonded end
74 Spherical partition-bonding end
75 Partition-elongated joining section
76 Rounded partition-elongated joining end
100 Extrusion molding machine
120 Pedestal
140 Roller conveyor
240 Cutting blade
400 Closing jig
400' Closing jig
401 a, 401 b Closing faces
410a, 410b, 410d, 410e, 410f, 410g, 410h, 410i Closing protrusions
411 Triangular pyramidal base
412 Conical tip
413 Triangular pyramidal side section
414 Round chamfered trough section
415 Round chamfered side edge
418 Elongated joining section-forming groove
422 Circular conical side section
432 Truncated hexagonal pyramidal tip
433 Truncated hexagonal pyramidal side face
434 Middle recess
435 Truncated hexagonal pyramidal side edge
437 Middle regular triangular flat region
450 Support socket section
451 Slanted surface

## Claims

1. A method for manufacturing a honeycomb structure having a plurality of through-holes opening at end faces of a cylinder and mutually divided by partitions, some of the through-holes being closed, comprising:
a closing step of bonding together the partitions to close the through-holes by inserting a closing jig into some of the through-holes of a green honeycomb molded body having a plurality of hexagonal through-holes mutually divided by partitions and opening at end faces of the cylinder.

2. The method for manufacturing a honeycomb structure according to claim 1, wherein
the green honeycomb molded body has one first through-hole and six second through-holes around the first through-hole, the second through-holes being adjacent to the first through-hole by the partitions being interposed therebetween and having smaller open areas than the first through-hole, and
in the closing step, the partitions of the first through-hole are bonded together to close the first through-hole by inserting closing protrusions of the closing jig having a plurality of closing protrusions including square pyramidal shapes and/or truncated square pyramidal shapes with rhomboid bottom faces into the second through-holes with long sides of the closing protrusions contacting the partitions of the first through-hole.

3. The method for manufacturing a honeycomb structure according to claim 1, wherein in the closing step, the partitions of the through-holes are bonded together to close the through-hole by inserting closing protrusions of the closing jig having a plurality of closing protrusions including triangular pyramidal shapes and/or truncated triangular pyramidal shapes into each of the six through-holes adjacent around one of the through-holes.

4. The method for manufacturing a honeycomb structure according to any one of claims 1 to 3, wherein in the closing step, the partitions of the through-holes are bonded together to close the through-holes by inserting closing protrusions of the closing jig having a plurality of closing protrusions including conical and/or truncated conical shapes into each one of the through-holes surrounded by the six through-holes.

5. The method for manufacturing a honeycomb structure according to any one of claims 1 to 3, wherein in the closing step, the partitions of the through-holes are bonded together to close the through-holes by inserting closing protrusions of the closing jig having a plurality of closing protrusions including hexagonal pyramidal and/or truncated hexagonal pyramidal shapes into each one of the through-holes surrounded by the six through-holes.

6. The method for manufacturing a honeycomb structure according to claim 5, wherein in the closing step, the through-holes are closed by the closing jig having the closing protrusions each being closest to the hexagonal pyramidal and/or truncated hexagonal pyramidal side sections.

7. The method for manufacturing a honeycomb structure according to claim 5, wherein in the closing step, the through-holes are closed by a closing jig having the closing protrusions each adapting the hexagonal pyramidal and/or truncated hexagonal pyramidal base sections to face each other and be in close contact.

8. The method for manufacturing a honeycomb structure according to any one of claims 1 to 7, wherein in the closing step, the through-holes are closed by the closing jig having grooves in a valley between each of the closing protrusions thereof, such that the bonded partitions become mutually parallel across a prescribed length from the end face.

9. The method for manufacturing a honeycomb structure according to any one of claims 1 to 8, wherein in the closing step, the through-holes are closed by the closing jig round-chamfered at a valley between each of the closing protrusions, such that the bonded partitions become rounded at the end face.

10. The method for manufacturing a honeycomb structure according to any one of claims 1 to 9, wherein
in the closing step, the through-holes at both end faces of the green honeycomb molded body are closed simultaneously, immediately after the green honeycomb molded body has been extrusion-molded from a raw material and cut to a prescribed length, and
the through-holes on at least one end face of the green honeycomb molded body are closed by inserting the closing jig into some of the through-holes.

11. The method for manufacturing a honeycomb structure according to claim 10, further comprising
a supporting step of supporting with the closing jig the lower end face of the green honeycomb molded body immediately after it being extrusion-molded in a vertical downward direction from the raw material, wherein
in the closing step, the partitions are bonded together to close the through-holes by respectively inserting a plurality of closing protrusions of the closing jig into some of the through-holes on the lower end face of the green honeycomb molded body after being supported in the supporting step.

12. The method for manufacturing a honeycomb structure according to claim 11, wherein
the closing jig is selectively modifiable to being in a state such that the closing protrusions are housed on an inner side of a support surface and a state such that the closing protrusions project to an outer side of the support surface,
in the supporting step, the lower end face of the green honeycomb molded body immediately after being extrusion-molded from the raw material in the vertical downward direction is supported by the support surface of the closing jig having closing protrusions in the state of being housed state on the inner side of the support surface, and
in the closing step, the partitions are bonded together to close the through-holes by respectively inserting the closing protrusions of the closing jig having closing protrusions in the state of projecting to the outer side of the support surface into some of the through-holes on the lower end face of the green honeycomb molded body.
